# EUROPEAN PATENT APPLICATION

(11) **EP 4 585 027 A1**
(43) Date of publication of application: **16.07.2025**
(21) Application number: 23862479.5
(22) Date of filing: 07.09.2023
(51) Int. Cl.: A01D 34/00, G05D 1/20

(54) **SELF-MOVING DEVICE, METHOD FOR CONTROLLING SELF-MOVING DEVICE AND MOWING CONTROL APPARATUS**

(30) Priority: 07.09.2022 CN 202211092721; 01.03.2023 CN 202310182475
(71) Applicant: Positec Power Tools (Suzhou) Co., Ltd., Suzhou, Jiangsu 215123 (CN)
(72) Inventor: LIAN, Hongkui, Suzhou, Jiangsu 215123 (CN); DU, Jiang, Suzhou, Jiangsu 215123 (CN)
(74) Representative: Kilburn & Strode LLP
(86) International application number: PCT/CN2023/117515
(87) International publication number: WO 2024/051785

(57) **Abstract**

The present invention relates to a self-moving device, which includes: a body; a grass pressing mechanism including a grass pressing assembly located on one side of the body and a grass pressing assembly located on the other side of the body, the grass pressing mechanism being configured to produce an indentation on one side of the body and an indentation on the other side of the body on the lawn, and widths of the indentations on the two sides being equal; and a controller configured to: control the self-moving device to perform traversal movement for N times in the working area on the lawn, N being an odd number greater than or equal to 1; control the self-moving device to move along multiple parallel and equally-spaced paths in a single traversal movement, the path spacing between adjacent paths in the single traversal movement being B, and the directions being opposite, so that the grass pressing mechanism produces an indentation in a first direction and an indentation in a second direction on the lawn; paths of different single traversal movements of N traversal movements being non-coincident and parallel to each other; after the N traversal movements, directions of adjacent paths formed by the N traversal movements being opposite, a path spacing between adjacent paths being B', B'=B/N.

## Description

### TECHNICAL FIELD

The present invention relates to the technical field of autonomous moving devices, and specifically, to an autonomous moving device and a method for controlling the same, a lawn mowing control apparatus, a computer device, a storage medium, and a computer program product.

### BACKGROUND

The lawn of a football field usually presents stripes with alternating shades of color for aesthetic purposes and to alleviate visual fatigue for both the audience and players. In order to achieve the distribution of interval shades of color on the lawn, professionals usually use specialized pressing rollers to press the lawn before each football match to produce different imprints and compact the lawn. Due to the different lodging directions of the grass in different directions, the produced imprints will have a visual effect of alternating shades of color after being reflected by light. In addition, chemical, biological and other methods will be adopted to treat the lawn to obtain stripes with interval shades of color. For example, specialized fertilizers are applied or green enhancers are sprayed. Different contents of nitrogen and potassium fertilizers can change the color of the lawn.

In the prior art, no matter whether mechanical lawn mowers with pressing rollers are adopted to press the lawn or other chemical or biological methods are adopted, additional human resources and/or economic costs are required in addition to daily lawn trimming work.

### SUMMARY

In view of the above, aiming at the problem of wasting human resources or economic costs in the prior art, the present invention provides an autonomous moving device and a method for controlling the same, and a control apparatus, in order to improve the problem of wasting human resources or economic costs in the prior art.

According a first aspect, the present invention provides an autonomous moving device. The autonomous moving device is movable on a lawn. The autonomous moving device includes:
a body;
a grass-pressing mechanism mounted to the body, the grass-pressing mechanism including a grass-pressing assembly located on one side of the body and a grass-pressing assembly located on the other side of the body and being configured to produce an imprint on one side of the body and an imprint on the other side of the body on the lawn when the autonomous moving device moves on the lawn, and a width of the imprint on one side of the body being equal to a width of the imprint on the other side of the body; and
a controller mounted to the body and configured to control the autonomous moving device to move in a working area on the lawn,
where the controller is configured to:
   control the autonomous moving device to perform traversal movement for N times in the working area on the lawn, N being an odd number greater than or equal to 1;
   control the autonomous moving device to move along multiple parallel and equally-spaced paths in a single traversal movement, a path spacing between adjacent paths in the single traversal movement being **B,** and directions of adjacent paths in the single traversal movement being opposite, so that the grass-pressing mechanism produces an imprint in a first direction and an imprint in a second direction on the lawn;
   paths of different single traversal movements of N traversal movements being non-coincident and parallel to each other; after the N traversal movements, directions of adjacent paths formed by the N traversal movements being opposite, a path spacing between adjacent paths formed by the N traversal movements being B', B'=B/N; and
   determine the path spacing **B,** so that the grass-pressing mechanism produces multiple imprints in the first direction and multiple imprints in the second direction on the lawn, the imprints in the first direction and the imprints in the second direction being adjacently arranged at interval.

In some embodiments, the autonomous moving device includes a moving assembly mounted to the body and configured to drive the body to move, and the moving assembly includes moving wheel located on one side of the body and moving wheel located on the other side of the body; and the grass-pressing assemblies include the moving wheel.

In some embodiments, the path spacing B is determined according to an outer span D of the imprint located on one side of the body and the imprint located on the other side of the body, and the width d of the imprint on a single side; the path spacing B, the outer span D, and the width d of the imprint on a single side satisfy: 4/5*N(D-2d)≤B≤6/5*N(D-2d).

In some embodiments, the path spacing B, the outer span D, and the width d of the imprint on a single side satisfy: B=N(D-2d), and D/4≤d<D/3, so that the spacing between two adjacent imprints of the multiple imprints produced by the grass-pressing mechanism is less than or equal to zero.

In some embodiments, the path spacing B, the outer span D, and the width d of the imprint on a single side satisfy: B<N(D-2d), d≥D/4, and N(2d-40 mm)≤B≤N(2d+20 mm), so that among the multiple imprints produced by the grass-pressing mechanism, the spacing R1 between two adjacent imprints in different directions satisfies: 0 mm≤R1≤40 mm, and the spacing R2 between two adjacent imprints in the same direction satisfies: R2≤0 mm.

In some embodiments, the path spacing B, the outer span D, and the width d of the imprint on a single side satisfy: B>N(D-2d), d≥D/4, and N(2d-40 mm)≤B≤N(2d+20) mm, so that among the multiple imprints produced by the grass-pressing mechanism, the spacing R2 between two adjacent imprints in the same direction satisfies: 0 mm≤R2<40 mm, and the spacing R1 between two adjacent imprints in different directions satisfies: -40 mm≤R1≤40 mm.

In some embodiments, the autonomous moving device is an automatic lawn mower, the automatic lawn mower further includes a mowing assembly mounted to the body and configured to mow grass on the lawn, and a center of the mowing assembly is located on a longitudinal axis of the body; a mowing width M of the mowing assembly perpendicular to the longitudinal axis and the path spacing B satisfy: NM≥B.

**In** some embodiments, the moving wheel located on one side of the body and the moving wheel located on the other side of the body both include a moving wheel located at the front of the body and a moving wheel located at the rear of the body; a spacing X between the moving wheel located at the front of the body and the moving wheel located at the rear of the body on the same side of the body along a direction perpendicular to a traveling direction of the moving assembly satisfies: X≤40 mm.

**In** some embodiments, the autonomous moving device performs traversal movement in the working area on the lawn according to an S-shaped path or a rectangular spiral path.

According a second aspect, the present invention provides a method for controlling an autonomous moving device. The autonomous moving device is movable on a lawn. The autonomous moving device includes:
a body;
a grass-pressing mechanism mounted to the body, the grass-pressing mechanism including a grass-pressing assembly located on one side of the body and a grass-pressing assembly located on the other side of the body and being configured to produce an imprint on one side of the body and an imprint on the other side of the body on the lawn when the autonomous moving device moves on the lawn, and a width of the imprint on one side of the body being equal to a width of the imprint on the other side of the body; and
a controller mounted to the body and configured to control the autonomous moving device to move in a working area on the lawn,
where the control method includes:
   controlling the autonomous moving device to perform traversal movement for N times in the working area on the lawn, N being an odd number greater than or equal to 1;
   controlling the autonomous moving device to move along multiple parallel and equally-spaced paths in a single traversal movement, a path spacing between adjacent paths in the single traversal movement being B, and directions of adjacent paths in the single traversal movement being opposite, so that the grass-pressing mechanism produces an imprint in a first direction and an imprint in a second direction on the lawn;
   paths of different single traversal movements of N traversal movements being non-coincident and parallel to each other; after the N traversal movements, directions of adjacent paths formed by the N traversal movements being opposite, a path spacing between adjacent paths formed by the N traversal movements being B', B'=B/N; and
   determining the path spacing **B,** so that the grass-pressing mechanism produces multiple imprints in the first direction and multiple imprints in the second direction on the lawn, the imprints in the first direction and the imprints in the second direction being adjacently arranged at interval.

**In** some embodiments, the grass-pressing mechanism includes a grass-pressing assembly located on one side of the body and a grass-pressing assembly located on the other side of the body; the autonomous moving device includes a moving assembly mounted to the body and configured to drive the body to move, and the moving assembly includes moving wheel located on one side of the body and moving wheel located on the other side of the body; and the grass-pressing assemblies include the moving wheel.

In some embodiments, the path spacing B is determined according to an outer span D of the imprint located on one side of the body and the imprint located on the other side of the body, and the width d of the imprint on a single side; the path spacing B, the outer span D, and the width d of the imprint on a single side satisfy: 4/5*N(D-2d)≤B≤6/5*N(D-2d).

In some embodiments, the autonomous moving device is an automatic lawn mower, the automatic lawn mower further includes a mowing assembly mounted to the body and configured to mow grass on the lawn, and a center of the mowing assembly is located on a longitudinal axis of the body; a mowing width M of the mowing assembly perpendicular to the longitudinal axis and the path spacing B satisfy: NM≥B.

According a third aspect, when N=1, the present invention provides a method for controlling an autonomous moving device. The autonomous moving device includes:
a body; and
a moving assembly mounted to the body and configured to drive the body to move, the moving assembly including moving wheel located on one side of the body and moving wheel located on the other side of the body; the grass-pressing assemblies including the moving wheel.

The method includes:
a) controlling the autonomous moving device to move along a first path in a first traveling direction, where during the movement, the moving wheel located on the two sides of the body produce two imprints in a first direction on the lawn, and the grass under the imprints in the first direction lodges along the first traveling direction;
b) controlling the autonomous moving device to move along a second path in a second traveling direction, where the second path is shifted by one path spacing B relative to the first path, the second direction is opposite to the first traveling direction, and during the movement, the moving wheel located on the two sides of the body produce two imprints in a second direction on the lawn, and the grass under the imprints in the second direction lodges along the second traveling direction;
c) controlling the autonomous moving device to move along a third path in the first traveling direction, where the third path is shifted by one path spacing B relative to the second path, and during the movement, the moving wheel located on the two sides of the body produce two imprints in the first direction on the lawn; and
d) controlling the autonomous moving device to move along a fourth path in the second traveling direction, where the fourth path is shifted by one path spacing B relative to the third path, and during the movement, the moving wheel located on the two sides of the body produce two imprints on the lawn,
where the path spacing B is configured so that: among the four imprints in the first direction produced by the moving wheel on two adjacent paths in the first traveling direction, the two imprints in the first direction located at the middle are adjacent; among the four imprints in the second direction produced by the moving wheel on two adjacent paths in the second traveling direction, the two imprints in the second direction located at the middle are adjacent; and the two adjacent imprints in the first direction are adjacent to the two adjacent imprints in the second direction.

In some embodiments, in a case that the autonomous moving device is an automatic lawn mower, the automatic lawn mower further includes a mowing assembly, the mowing assembly is arranged between the moving wheel on the two sides of the body, and the mowing assembly performs a mowing task when the automatic lawn mower moves along the path in the first traveling direction or along the path in the second traveling direction.

In some embodiments, the method includes: controlling the autonomous moving device to acquire different task instructions and control the path spacing B, so that the spacing between two adjacent imprints of multiple imprints produced by the moving wheel in step d is different.

In some embodiments, the method includes: acquiring the path spacing B from configuration parameters pre-configured by the autonomous moving device; and the path spacing B is determined according to the outer span D of the autonomous moving device and the width d of the imprint on a single side.

In some embodiments, the method includes: acquiring the outer span D of the autonomous moving device and the width d of the imprint on a single side; and determining the path spacing B according to the outer span D of the autonomous moving device and the width d of the imprint on a single side.

In some embodiments, the method includes: controlling the path spacing B, so that the path spacing B, the outer span D, and the width d of the imprint on a single side satisfy: 4/5*(D-2d)≤B≤6/5*(D-2d).

In some embodiments, the method includes: controlling the path spacing B, so that the spacing between two adjacent imprints of multiple imprints produced by the moving wheel in step d is less than or equal to zero, where the path spacing B, the outer span D, and the width d of the imprint on a single side satisfy: B=D-2d, and D/4≤d<D/3.

In some embodiments, the method includes: controlling the path spacing B, so that among multiple imprints produced by the moving wheel in step d, the spacing R1 between two adjacent imprints under which the grass lodges along different traveling directions satisfies: 0 mm≤R1≤40 mm, and the spacing R2 between two adjacent imprints under which the grass lodges along the same traveling direction satisfies: R2≤0 mm, where the path spacing B, the outer span D, and the width d of the imprint on a single side satisfy: B<D-2d, d≥D/4, and 2d-40 mm≤B≤2d+20 mm.

In some embodiments, the method includes: controlling the path spacing B, so that among multiple imprints produced by the moving wheel in step d, the spacing R2 between two adjacent imprints under which the grass lodges along the same traveling direction satisfies: 0 mm≤R2≤40 mm, and the spacing R1 between two adjacent imprints under which the grass lodges along different traveling directions satisfies: -40 mm≤R1≤40mm, where the path spacing B, the outer span D, and the width d of the imprint on a single side satisfy: B>D-2d, d≥D/4, and 2d-40 mm≤B≤2d+20 mm.

In some embodiments, the method includes: the moving wheel located on one side of the body and the moving wheel located on the other side of the body each include a moving wheel located at the front of the body and a moving wheel located at the rear of the body; a spacing X between an outer side of the moving wheel located at the front of the body and an inner side of the moving wheel located at the rear of the body on the same side of the body along a direction perpendicular to a traveling direction of the moving assembly satisfies: X≤40 mm.

According a fourth aspect, the present invention provides an autonomous moving device. The autonomous moving device includes:
a body;
a moving assembly mounted to the body and configured to drive the body to move, the moving assembly including moving wheel located on one side of the body and moving wheel located on the other side of the body;
the grass-pressing assemblies including the moving wheel; and
a controller mounted to the body and configured to control the autonomous moving device to move in a working area on the lawn,
the controller being configured to:
   control the autonomous moving device to perform traversal movement for N times in the working area on the lawn, N being an odd number greater than or equal to 1;
   control the autonomous moving device to move along multiple parallel and equally-spaced paths in a single traversal movement, a path spacing between adjacent paths in the single traversal movement being B, and directions of adjacent paths in the single traversal movement being opposite, so that the grass-pressing mechanism produces an imprint in a first direction and an imprint in a second direction on the lawn;
   paths of different single traversal movements of N traversal movements being non-coincident and parallel to each other; after the N traversal movements, directions of adjacent paths formed by the N traversal movements being opposite, a path spacing between adjacent paths formed by the N traversal movements being B' B'=B/N; and
   determine the path spacing B, so that the grass-pressing mechanism produces multiple imprints in the first direction and multiple imprints in the second direction on the lawn, the imprints in the first direction and the imprints in the second direction being adjacently arranged at interval; the path spacing B being determined according to the outer span D of the automatic lawn mower and the width d of the imprint on a single side, the path spacing B, the outer span D, and the width d of the imprint on a single side satisfying: 4/5*N(D-2d)≤B≤6/5*N(D-2d).

In some embodiments, in a case that the autonomous moving device is an automatic lawn mower, the automatic lawn mower further includes a mowing assembly mounted to the body and configured to perform a mowing task; when the moving assembly alternately moves along a path in a first traveling direction and a path in a second traveling direction, the controller controls the mowing assembly to perform the mowing task, and the mowing assembly is located between the moving wheel on the two sides of the body.

In some embodiments, the path spacing B, the outer span D, and the width d of the imprint on a single side satisfy: B=N(D-2d), and D/4≤d<D/3.

In some embodiments, the path spacing B, the outer span D, and the width d of the imprint on a single side satisfy: B<N(D-2d), d≥D/4, and N(2d-40 mm)≤B≤N(2d+20 mm).

In some embodiments, the path spacing B, the outer span D, and the width d of the imprint on a single side satisfy: B>N(D-2d), d≥D/4, and N(2d-40 mm)≤B≤N(2d+20 mm).

In some embodiments, the moving wheel located on one side of the body and the moving wheel located on the other side of the body both include a moving wheel located at the front of the body and a moving wheel located at the rear of the body; a spacing X between an outer side of the moving wheel located at the front of the body and an inner side of the moving wheel located at the rear of the body on the same side of the body along a direction perpendicular to a traveling direction of the moving assembly satisfies: X≤40 mm.

According a fifth aspect, when N=1, the present invention provides an autonomous moving device. The autonomous moving device includes:
a body;
a moving assembly mounted to the body and configured to drive the body to move, the moving assembly including moving wheel located on one side of the body and moving wheel located on the other side of the body; the grass-pressing assemblies including the moving wheel; and
a controller configured to perform the following steps when the automatic lawn mower is located in a working area:
   g) controlling the autonomous moving device to move along a first path in a first traveling direction, where during the movement, the moving wheel located on the two sides of the body produce two first imprints on the lawn, and the grass under the first imprints lodges along the first traveling direction;
   h) controlling the autonomous moving device to move along a second path in a second traveling direction, where the second path is shifted by one path spacing B relative to the first path, the second traveling direction is opposite to the first traveling direction, and during the movement, the moving wheel located on the two sides of the body produce two second imprints on the lawn, and the grass under the second imprints lodges along the second traveling direction;
   j) controlling the autonomous moving device to move along a third path in the first traveling direction, where the third path is shifted by one path spacing B relative to the second path, and during the movement, the moving wheel located on the two sides of the body produce two first imprints on the lawn; and
   k) controlling the autonomous moving device to move along a fourth path in the second traveling direction, where the fourth path is shifted by one path spacing B relative to the third path, and during the movement, the moving wheel located on the two sides of the body produce two second imprints on the lawn,
where the path spacing B is configured so that: among the four imprints in the first direction produced by the moving wheel on two adjacent paths in the first traveling direction, the two imprints in the first direction located at the middle are adjacent; among the four imprints in the second direction produced by the moving wheel on two adjacent paths in the second traveling direction, the two imprints in the second direction located at the middle are adjacent; and the two adjacent imprints in the first direction are adjacent to the two adjacent imprints in the second direction.

According a sixth aspect, when the autonomous moving device is an automatic lawn mower and N=1, the present invention provides a lawn mowing control apparatus. The apparatus includes:
a configuration parameter acquisition module configured to acquire configuration parameters of the automatic lawn mower when the automatic lawn mower is located in a working area; and
a storage module configured to store the configuration parameters, the configuration parameters including path spacing B;
the apparatus is configured to perform the following steps when the automatic lawn mower is located in the working area:
   t) acquiring, by the configuration parameter acquisition module, the path spacing B from the storage module;
   y) controlling the automatic lawn mower to move along a first path in a first traveling direction, where during the movement, the moving wheel located on the two sides of the body produce two imprints in a first direction on the lawn, and the grass under the imprints in the first direction lodges along the first traveling direction;
   u) controlling the automatic lawn mower to move along a second path in a second traveling direction, where the second path is shifted by one path spacing B relative to the first path, the second traveling direction is opposite to the first traveling direction, and during the movement, the moving wheel located on the two sides of the body produce two imprints in a second direction on the lawn, and the grass under the imprints in the second direction lodges along the second traveling direction;
   i) controlling the automatic lawn mower to move along a third path in the first traveling direction, where the third path is shifted by one path spacing B relative to the second path, and during the movement, the moving wheel located on the two sides of the body produce two imprints in the first direction on the lawn; and
   o) controlling the automatic lawn mower to move along a fourth path in the second traveling direction, where the fourth path is shifted by one path spacing B relative to the third path, and during the movement, the moving wheel located on the two sides of the body produce two imprints in the second direction on the lawn,
where the path spacing B is configured so that: among the four imprints in the first direction produced by the moving wheel of the automatic lawn mower on two adjacent paths in the first traveling direction, the two imprints in the first direction located at the middle are adjacent; among the four imprints in the second direction produced by the moving wheel of the automatic lawn mower on two adjacent paths in the second traveling direction, the two imprints in the second direction located at the middle are adjacent; and the two adjacent imprints in the first direction are adjacent to the two adjacent imprints in the second direction.

According to a seventh aspect, the present invention provides a computer device, which includes a memory and a processor. The memory has a computer program stored thereon. The computer program, when executed by the processor, implements the method steps of the automatic lawn mower and the lawn mowing control apparatus described above.

According to an eighth aspect, the present invention provides a computer-readable storage medium having a computer program stored thereon. The computer program, when executed by a processor, implements the method steps of the automatic lawn mower and the lawn mowing control apparatus described above.

According to a ninth aspect, the present invention provides a computer program product, which includes a computer program. The computer program, when executed by a processor, implements the method steps of the automatic lawn mower and the lawn mowing control apparatus described above.

### BRIEF DESCRIPTION OF THE DRAWINGS

FIG. 1 is a schematic side view of an autonomous moving device in some embodiments.
FIG. 2 is a top view of an autonomous moving device in some embodiments.
FIG. 3 is a schematic view of a path along which an autonomous moving device traverses a working area for a single time in some embodiments.
FIG. 4 is a schematic view of a path along which an autonomous moving device traverses a working area for N times in some embodiments.
FIG. 5 is a schematic view of imprints formed after an autonomous moving device traverses a working area for N times in some embodiments.
FIG. 6 shows a method for controlling an autonomous moving device in some embodiments.
FIG. 7 is a schematic view of performing step S100 in some embodiments.
FIG. 8 is a schematic view of performing step S110 in some embodiments.
FIG. 9 is a schematic view of performing step S120 in some embodiments.
FIG. 10 is a schematic view of performing step S130 in some embodiments.
FIG. 11 is a schematic view when an autonomous moving device controls a moving assembly to move according to a certain path spacing in some embodiments.
FIG. 12 is a schematic view when an autonomous moving device controls a moving assembly to move according to another path spacing in some embodiments.
FIG. 13 is a schematic view when an autonomous moving device controls a moving assembly to move according to another path spacing in some embodiments.
FIG. 14 is a schematic view when an autonomous moving device controls a moving assembly to move according to another path spacing in some embodiments.
FIG. 15 is a schematic view of stripes formed when an autonomous moving device performs lawn mowing in a traveling direction forming a certain included angle relative to a boundary of a lawn in some embodiments.
FIG. 16 is a schematic structural view of an automatic lawn mower in some embodiments.
FIG. 17 is a schematic structural view of a lawn mowing control apparatus in some embodiments.
FIG. 18 is a schematic structural view of an automatic lawn mower in some embodiments.

### DETAILED DESCRIPTION

To make the objectives, technical solutions, and advantages of this application clearer, the following further describes this application in detail with reference to the accompanying drawings and the embodiments. It is to be understood that the specific embodiments described herein are merely intended to explain this application, instead of limiting this application.

The specific type of the autonomous moving device is not limited in this application. For example, the autonomous moving device may be an automatic lawn mower, an automatic grass presser, an automatic water sprinkler, or the like.

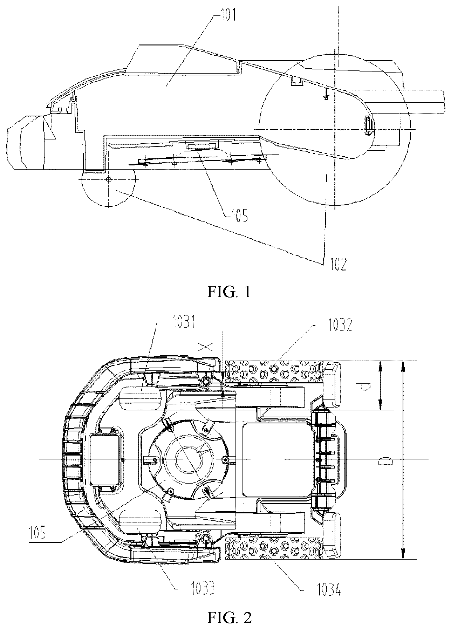

This application provides an autonomous moving device. Referring to FIG. 1, the autonomous moving device includes: a body 101; and a grass-pressing mechanism 102 mounted to the body 101 and including a grass-pressing assembly located on one side of the body and a grass-pressing assembly located on the other side of the body. The grass-pressing mechanism 102 presses grass on a lawn when the autonomous moving device moves on the lawn, so that the grass lodges towards a moving direction of the autonomous moving device, thus producing an imprint on one side of the body and an imprint on the other side of the body. The width of the imprint on one side of the body 101 is equal to the width of the imprint on the other side of the body 101. It is considered that the widths of the imprints on the two sides are equal as long as the difference between the widths of the imprints on the two sides of the body 101 is less than a threshold. **In** some embodiments, the threshold is 40 mm. When the difference between the widths of the imprints on the two sides of the body 101 is less than 40 mm, visually speaking, the widths of the imprints on the sides are equivalent, and it is considered that the widths of the imprints on the two sides are equal. The specific structure of the grass-pressing mechanism 102 is not limited in this application, as long as the grass-pressing mechanism 102 can press the lawn to produce the imprints on the lawn.

**In** some embodiments, referring to FIG. 2, the autonomous moving device further includes a moving assembly 103 mounted to the body 101 and configured to drive the body 101 to move. Specifically, the grass-pressing mechanism 102 includes a moving assembly 103, and the moving assembly 103 drives the body 101 to move while pressing the grass on the lawn to produce the imprints. Referring to FIG. 2, the moving assembly 103 includes a moving wheel 1031 and a moving wheel 1032 located on one side of the body 101. The moving assembly 103 further includes a moving wheel 1033 and a moving wheel 1034 located on the other side of the body 101. Therefore, the grass-pressing assembly of the grass-pressing mechanism 103 includes the moving wheel 1031 and 1032 located on one side of the body 101, and the moving wheel 1033 and 1034 located on the other side of the body 101. The moving wheel 1031 and the moving wheel 1033 located at the front of the body are driven wheels, while the moving wheel 1032 and the moving wheel 1034 located at the rear of the body are driving wheels, and the size of the moving wheel 1032 and the moving wheel 1034 is larger than the size of the moving wheel 1031 and the moving wheel 1033. **In** some other embodiments (not shown), the moving wheel 1031 and the moving wheel 1033 located at the front of the body are also driving wheels, while the moving wheel 1032 and the moving wheel 1034 located at the rear of the body are also driven wheels, and the size of the moving wheel 1032 and the moving wheel 1034 is also smaller than the size of the moving wheel 1031 and the moving wheel 1033. **In** some other embodiments (not shown), the moving wheel 1031, the moving wheel 1033, the moving wheel 1032, and the moving wheel 1034 are all driving wheels, and their sizes are the same or different.

In some embodiments (not shown), the moving assembly 103 is also composed of three moving wheel, such as two driving wheels located at the rear of the body 101 and arranged on the two sides of the body 101, and one driven wheel located at the front of the body 101 and arranged at the middle of the body 101. In some embodiments (not shown), the moving assembly 103 also include four or more moving wheel.

In some embodiments, the grass-pressing mechanism 102 is entirely composed of a moving assembly 103, and the moving assembly 103 can not only drive the autonomous moving device to move, but also press the grass on the lawn to produce imprints without the need for additional grass-pressing structures, so that the structure is simple and the cost is lower.

Certainly, the grass-pressing mechanism 102 is also an additional structure other than the moving assembly 103, or is composed of the moving assembly 103 and additional structures, which is not limited in this application.

When the autonomous moving device moves in the working area, the grass-pressing mechanism 102 presses the lawn, so that the pressed grass in the working area lodges along the traveling direction of the autonomous moving device, thus producing the imprints on the lawn. When the autonomous moving device travels in different directions, the pressed grass in the working area will lodge along different directions. Since the lodging directions of the grass is different, the imprints produced in different directions will form a visual effect of stripes with alternating shades of color after being reflected by light. When the autonomous moving device travels in two opposite directions in the working area, it will leave darker and lighter stripes on the lawn. The imprints corresponding to the darker stripes present a visual effect of darker color after being reflected by light, while the imprints corresponding to the lighter stripes present a visual effect of lighter color after being reflected by light.

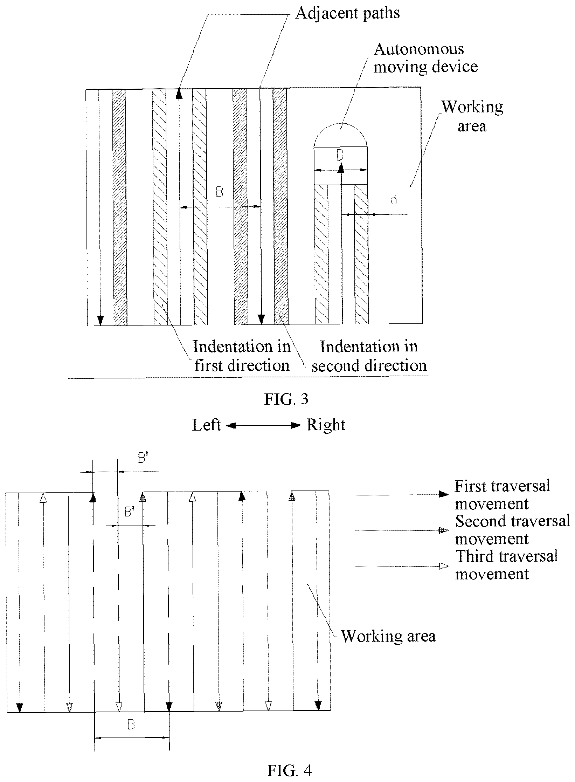

The autonomous moving device further includes a controller 104 (not shown) mounted to the body 101. The controller 104 plans the movement path of the autonomous moving device and controls the autonomous moving device to move in a working area on the lawn. The working area may be a whole piece of lawn defined by physical or virtual boundaries, or a local area on the lawn, which is not limited in this application. The controller 104 controls the autonomous moving device to perform traversal movement for N times in the working area on the lawn. N is an odd number greater than or equal to 1. Referring to FIG. 3, the controller 104 controls the autonomous moving device to move along multiple parallel and equally-spaced paths in a single traversal movement, the path spacing between adjacent paths in the single traversal movement is B, and the directions of adjacent paths in the single traversal movement are opposite, so that the grass-pressing mechanism 103 produces an imprint in a first direction and an imprint in a second direction on the lawn, thus forming two types of stripes with alternating shades of color in the visual effect.

The controller 104 controls the autonomous moving device to perform traversal movement for N times in the working area. In the working area, the autonomous moving device firstly moves from one side of the working area to the other side along multiple parallel paths with the path spacing of B and opposite directions of adjacent paths, and then moves from the other side of the working area to one side of the working area along multiple parallel paths with the path spacing of B and opposite directions of adjacent paths, or moves from one side of the working area to the other side along multiple parallel paths with the path spacing of B and opposite directions of adjacent paths, and repeats such movement, until the autonomous moving device completes traversal movement for N times in the working area. Paths of different single traversal movements of N traversal movements are non-coincident and parallel to each other. After the N traversal movements, the directions of adjacent paths of the paths formed by the autonomous moving device are opposite, the path spacing between adjacent paths is B', and B'=B/N. The controller 104 needs to determine the value of the path spacing B, so that the grass-pressing mechanism 103 produces multiple imprints in the first direction and multiple imprints in the second direction on the lawn. The imprints in the first direction and the imprints in the second direction are adjacently arranged at interval. The imprints in the first direction correspond to stripes with a first color, and the imprints in the second direction correspond to stripes with a second color, thus obtaining the stripes with the first color and the stripes with the second color that are alternately arranged at interval.

Referring to FIG. 4, as an example when N=3, the autonomous moving device performs traversal movement in the working area for three times. In a single traversal movement, the autonomous moving device moves along multiple parallel paths with the path spacing of B and opposite directions of adjacent paths. Referring to FIG. 4, the arrows represent moving directions of the autonomous moving device. The dashed line with the arrow represents a path along which the autonomous moving device performs traversal movement for a first time. The solid line with the arrow represents a path along which the autonomous moving device performs traversal movement for a second time. The dotted line with the arrow represents a path along which the autonomous moving device performs traversal movement for a third time. Paths of different single traversal movements of three traversal movements are non-coincident and parallel to each other. After the three traversal movements, the directions of adjacent paths formed by the autonomous moving device are opposite, the path spacing between adjacent paths is B', and B'=B/3. The starting point and ending point of each traversal movement of the autonomous moving device are not limited in this application. As an example, referring to FIG. 4, in some embodiments, the autonomous moving device firstly performs traversal movement in the working area from left to right along a first traversal movement path, then performs traversal movement in the working area from right to left along a second traversal movement path, and then performs traversal movement in the working area from left to right along a third traversal movement path, so that among the paths finally passed by the autonomous moving device, the directions of adjacent paths are opposite, and the path spacing between adjacent paths is B', and B'=B/3.

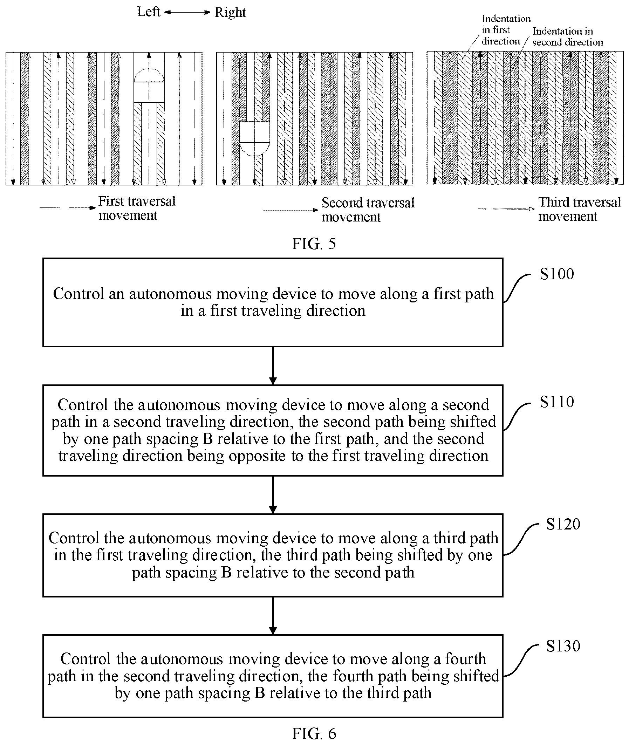

FIG. 5 shows multiple imprints in a first direction and multiple imprints in a second direction formed by the grass-pressing mechanism 102 after the autonomous moving device traverses the working area along the three traversal paths shown in FIG. 4. The imprints in the first direction and the imprints in the second direction are arranged with spacing. The imprints in the first direction correspond to stripes with a first color, and the imprints in the second direction correspond to stripes with a second color, thus finally obtaining the stripes with the first color and the stripes with the second color that are alternately arranged at interval.

Taking N=1 as an example, how the imprints in the first direction and the imprints in the second direction that are arranged at interval are formed will be described below in detail. When N=1, the autonomous moving device only traverses the working area once, and B'=B/N=B.

Referring to FIG. 6, the controller 104 controls the autonomous moving device to perform the following steps:
In S100, the autonomous moving device is controlled to move along a first path in a first traveling direction.

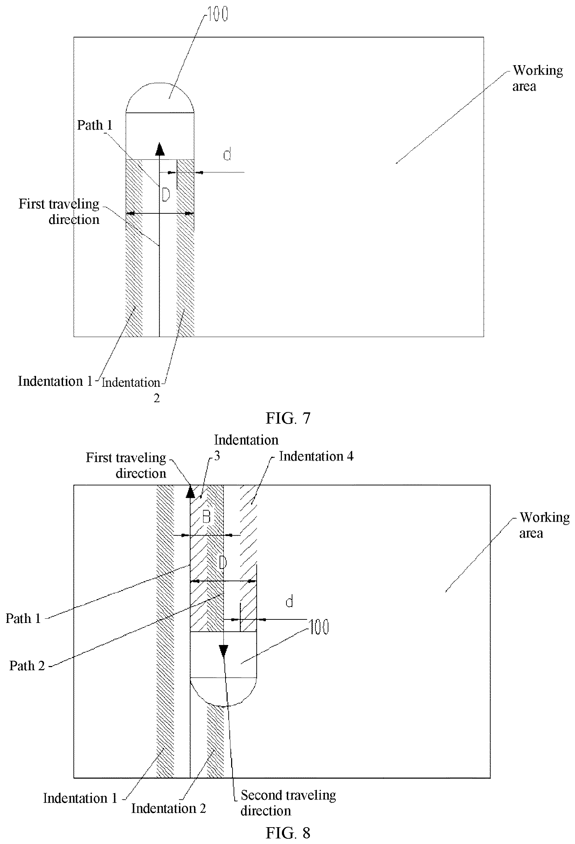

In this example, the grass-pressing assembly is entirely composed of the moving assembly 103 without any other additional structure. Referring to FIG. 7, in the process that the autonomous moving device moves along a first path (i.e., path 1) in a first traveling direction, the moving wheel 1031 and the moving wheel 1032 located on one side of the body 101 press the lawn to produce an imprint, i.e., imprint 1, while the moving wheel 1033 and the moving wheel 1034 located on the other side of the body 101 press the lawn to produce another imprint, i.e., imprint 2. In this application, the imprint produced by the movement of the autonomous moving device along the path in the first traveling direction is the imprint in the first direction. Therefore, every time the autonomous moving device moves along the path in the first traveling direction, the moving wheel on the two sides of the body 101 of the autonomous moving device will produce two imprints in the first direction, i.e., imprint 1 and imprint 2, and the grass under the imprints in the first direction lodges along the first traveling direction.

The first traveling direction of the autonomous moving device is not limited in this application. The first traveling direction is any direction relative to the working area of the autonomous moving device in some embodiments. In some embodiments, for example, when the working area of the autonomous moving device is a regular rectangular football field, the first traveling direction is a direction parallel or perpendicular to a certain boundary of the football field, and correspondingly, the path in the first traveling direction is a straight line segment parallel or perpendicular to the certain boundary of the football field.

In S110, the autonomous moving device is controlled to move along a second path in a second traveling direction. The second path is shifted by one path spacing B relative to the first path. The second traveling direction is opposite to the first traveling direction.

Referring to FIG. 8, corresponding to the movement of the autonomous moving device along the path in the first traveling direction, in the process that the autonomous moving device moves along a second path (i.e., path 2) in a second traveling direction, the moving wheel 1031 and the moving wheel 1032 located on one side of the body 101 press the lawn to produce an imprint, i.e., imprint 4, while the moving wheel 1033 and the moving wheel 1034 located on the other side of the body 101 press the lawn to produce another imprint, i.e., imprint 3. In this application, the imprint produced by the movement of the autonomous moving device along the path in the second traveling direction is the imprint in the second direction. Therefore, every time the autonomous moving device moves along the path in the second traveling direction, the moving wheel on the two sides of the body 101 of the autonomous moving device will produce two imprints in the second direction, i.e., imprint 3 and imprint 4, and the grass under the imprints in the second direction lodges along the second traveling direction.

Since the grass under the two imprints in the first direction produced by the moving assembly 103 lodges along the first traveling direction when the autonomous moving device moves in the first traveling direction, the grass under the two imprints in the second direction produced by the moving assembly 103 lodges along the second traveling direction when the autonomous moving device moves in the second traveling direction, and the first traveling direction is opposite to the second traveling direction, the imprints in the first direction and the imprints in the second direction will form a visual effect of stripes with a darker color and stripes with a lighter color after being reflected by light. In this application, the stripes corresponding to the imprints in the first direction are considered as stripes with a first color, and the stripes corresponding to the imprints in the second direction are considered as stripes with a second color. It is to be understood that the difference between the stripes with the first color and the stripes with the second color comes from the visual effect of varying shades of color formed by the imprints produced by the moving assembly 103 when traveling in two opposite directions after being reflected by light. Imprint 1 and imprint 2 correspond to the stripes with the first color, while imprint 3 and imprint 4 correspond to the stripes with the second color.

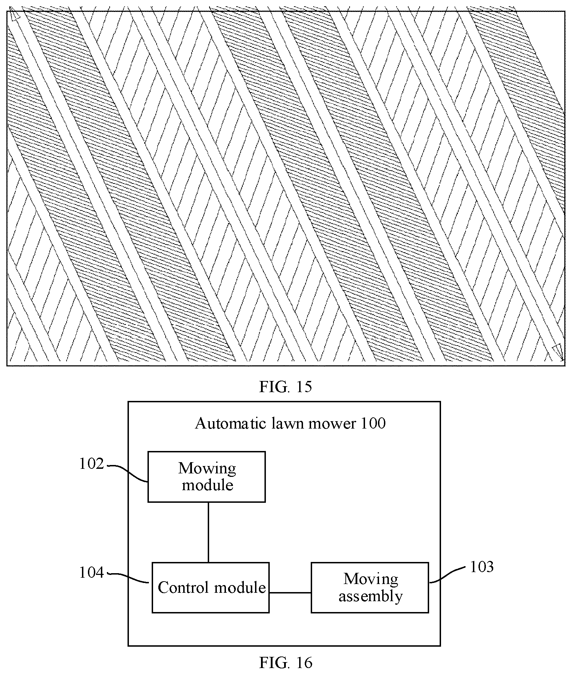

Referring to FIG. 8, since the path in the second traveling direction is obtained by shifting the path in the first traveling direction by the path spacing B, and the second traveling direction is opposite to the first traveling direction, in a case that the first traveling direction of the autonomous moving device is not limited and the first traveling direction is any direction relative to the working area of the autonomous moving device in some embodiments in this application, the second traveling direction is also any direction opposite to the first traveling direction relative to the working area of the autonomous moving device in some embodiments. Referring to FIG. 15, the first traveling direction and the second traveling direction are directions forming a certain included angle relative to the boundary of the lawn in some embodiments. In some embodiments, for example, when the working area of the autonomous moving device is a regular rectangular football field, if the first traveling direction is parallel or perpendicular to a certain boundary of the football field and the path in the first traveling direction is a straight line segment parallel or perpendicular to the certain boundary of the football field, then the second traveling direction is also parallel or perpendicular to the certain boundary of the football field and the path in the second traveling direction is a straight line segment parallel or perpendicular to the certain boundary of the football field.

In S120, the autonomous moving device is controlled to move along a third path in the first traveling direction. The third path is shifted by one path spacing B relative to the second path.

In S130, the autonomous moving device is controlled to move along a fourth path in the second traveling direction. The fourth path is shifted by one path spacing B relative to the third path.

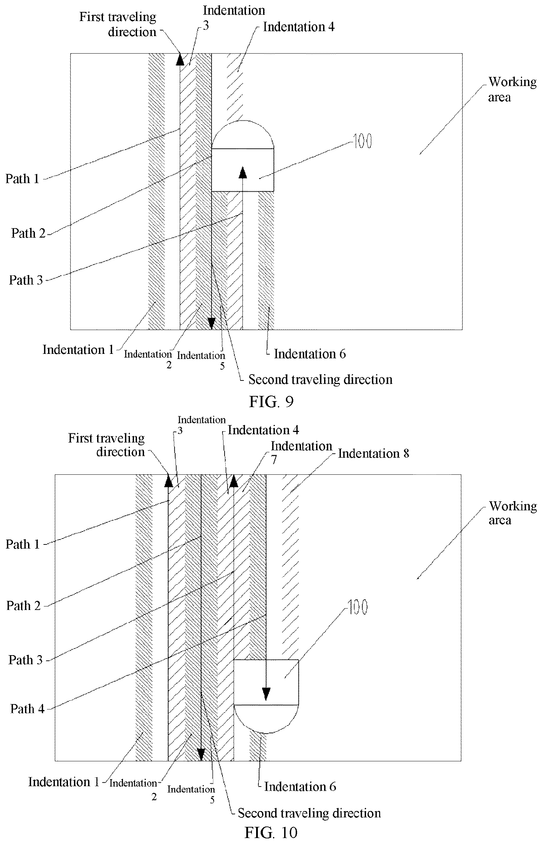

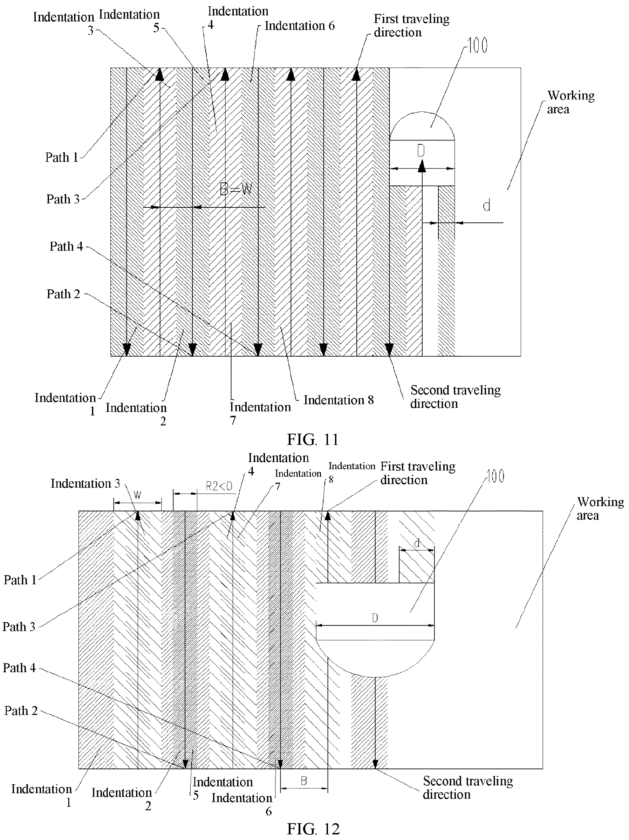

Referring to FIG. 9, when step S120 is performed, the autonomous moving device produces two imprints in the first direction again, i.e., imprint 5 and imprint 6, thus forming stripes with the first color. Referring to FIG. 10, when step S130 is performed, the autonomous moving device produces two imprints in the second direction again, i.e., imprint 7 and imprint 8, thus forming stripes with the first color. When the autonomous moving device is controlled to repeatedly perform step S100 to step S130 in the working area, multiple imprints in the first direction and multiple imprints in the second direction as shown in FIG. 11, i.e., multiple stripes with the first color and multiple stripes with the second color, can be produced.

The transition path from the ending point of path 1 to the starting point of path 2 for the autonomous moving device is not limited in this application, that is, the transition path from the ending point of the previous path to the starting point of the next path for the autonomous moving device is not limited. In some embodiments, the ending point of the previous path or the starting point of the next path for the autonomous moving device may be a point on a boundary of the working area. After the autonomous moving device reaches this point on this boundary, it may turn to adjust the traveling direction to travel along the boundary of the working area to the starting point of the next path, that is, the transition path may be a certain section on the boundary of the working area. In some other embodiments, the ending point of the previous path or the starting point of the next path for the autonomous moving device may also be a point inside the working area or a point outside the working area, the transition path is not limited to a certain section on the boundary of the working area, and the transition path may also be located inside the boundary of the working area or outside the boundary of the working area, or span the inside and outside the boundary of the working area. In some embodiments, the autonomous moving device performs traversal movement on the lawn according to an S-shaped path, and the autonomous moving device moves from the ending point of the previous path to the starting point of the next path through a transition path on a short side. In some other embodiments, the autonomous moving device performs traversal movement on the lawn according to a rectangular spiral path, and the directions of adjacent rectangular spiral paths are opposite, that is, if the direction of the previous rectangular spiral path is anticlockwise, then the direction of the next rectangular spiral path is clockwise.

In step S100 to step S130, the path spacing B needs to be controlled, so that among the four imprints in the first direction produced by the moving assembly 103 on two adjacent paths in the first traveling direction, the two imprints in the first direction located at the middle are adjacent; among the four imprints in the second direction produced by the moving assembly 103 on two adjacent paths in the second traveling direction, the two imprints in the second direction located at the middle are adjacent; and the two adjacent imprints in the first direction are adjacent to the two adjacent imprints in the second direction. Referring to FIG. 10, among the four imprints, i.e., imprint 1, imprint 2, imprint 5, and imprint 6, produced by the autonomous moving device on the adjacent path 1 and path 3 in the first traveling direction, the two imprints located at the middle, i.e., imprint 2 and imprint 5, are adjacent. Referring to FIG. 10, among the four imprints, i.e., imprint 3, imprint 4, imprint 7, and imprint 8, produced by the autonomous moving device on the adjacent path 2 and path 5 in the second traveling direction, the two imprints located at the middle, i.e., imprint 4 and imprint 7, are adjacent. In this application, the two adjacent paths refer to the absence of a third path between the two adjacent paths. The areas traversed by the body 101 of the autonomous moving device on the two adjacent paths may be spaced apart by a certain distance, or may be closely adjacent without spacing, or may be partially overlapped. In this application, the two adjacent imprints refer to the absence of a third imprint between the two adjacent imprints. The two adjacent imprints may be spaced apart by a certain distance, or may be closely adjacent without spacing, or may be partially overlapped. In this way, the imprint in the first direction and the imprint in the second direction that are finally formed are adjacently arranged at intervals.

In step S100 to step S130, the path spacing B also needs to be controlled, so that when the two adjacent paths in the first traveling direction (e.g., path 1 and path 3 shown in FIG. 10) and the two adjacent paths in the second traveling direction (e.g., path 2 and path 4 shown in FIG. 10) are alternately arranged (that is, path 1 to path 4 are alternately arranged in the first traveling direction and the second traveling direction), the two adjacent imprints in the first direction (e.g., imprint 2 and imprint 5) are adjacent to the two adjacent imprints in the second direction (e.g., imprint 4 and imprint 7). That is to say, referring to FIG. 10, the stripes with the first color formed by the two adjacent imprints in the first direction, i.e., imprint 2 and imprint 5, are adjacent to the stripes with the second color formed by the two adjacent imprints in the second direction, i.e., imprint 4 and imprint 7. When the automatic lawn mower 100 is controlled to repeatedly perform step S100 to step S130 in the working area, multiple adjacent stripes with the first color and multiple stripes with the second color, i.e., the stripes with the first color and the stripes with the second color that are in alternating shades of color shown in FIG. 11, can be produced, so as to achieve the effects of increasing the attractiveness and relieving the visual fatigue. The alternating and interval distribution of the stripes with the first color and the stripes with the second color not only looks attractive, but also can relieve the visual fatigue for people who need to stare at the lawn for a long time, such as players, referees and audience on the football field.

When N is an odd number greater than 1, the path spacing between the paths traversed by the autonomous moving device for N times in the working area is equivalent to the path spacing between the paths traversed by the autonomous moving device when N=1 (when the path spacing B in a single traversal movement is increased by N times, the path spacing between all paths finally traversed is B'=B/N), and paths that the directions of adjacent paths are opposite and parallel are finally formed. Therefore, when N is an odd number greater than 1, after the autonomous moving device traverses for N times, the grass-pressing mechanism 102 may also produce multiple imprints in the first direction and multiple imprints in the second direction, and the imprints in the first direction and the imprints in the second direction are adjacently arranged at intervals.

In some embodiments, when the autonomous moving device is an automatic lawn mower, referring to FIG. 1 and FIG. 2, the automatic lawn mower further includes a mowing assembly 105 mounted to the body 101, and the mowing assembly 105 performs a mowing task while moving along the path in the first traveling direction or along the path in the second traveling direction. In this way, the automatic lawn mower can traverse the working area, not only forming interval stripes with darker and lighter colors, but also performing a mowing task, thus reducing the human resources and economic costs.

In some embodiments, referring to FIG. 2, a center of the mowing assembly 105 is located on a longitudinal axis of the body 101, and the mowing width M of the mowing assembly 105 perpendicular to the longitudinal axis and the path spacing B satisfy NM≥B, that is, M≥B/N, that is M≥B'. Accordingly, it can be seen that B' is the path spacing between two adjacent paths of the paths traversed by the autonomous moving device after traversal movement for N times, and when the autonomous moving device passes through a certain path, the longitudinal axis of the body 101 is coincident with the path. Therefore, if the mowing assembly 105 is located on the longitudinal axis of the body 101 and M≥B', the autonomous moving device can traverse two adjacent paths and simultaneously mow the grass between the two adjacent paths completely without any omission.

The number of the mowing assemblies of the autonomous moving device is not limited in this application. For example, the autonomous moving device may be provided with one, two or three mowing assemblies. As long as the mowing centers of all mowing assemblies are located on the longitudinal axis of the body 101 and the mowing width M satisfies NM≥B, the autonomous moving device can traverse two adjacent paths and simultaneously mow the grass between the two adjacent paths completely without any omission.

In some embodiments, the path spacing B may be adjusted according to a task instruction received by the autonomous moving device, so as to adapt to the requirement of different spacing between two adjacent imprints of the multiple imprints produced by the grass-pressing mechanism 102 under different tasks. The task instruction received by the autonomous moving device may be stored and set in the autonomous moving device in advance, and may be triggered by the user operating the corresponding button or operation panel on the autonomous moving device; The task instruction may also be sent by the user to the autonomous moving device through an external device, such as mobile phone APP or computer. The spacing between two adjacent imprints may be a value greater than or equal to zero, or may be a value less than zero. The spacing being greater than zero indicates that there is a gap between two adjacent imprints. The spacing being equal to zero indicates that there is no gap between two adjacent imprints. The spacing being less than zero indicates that the two adjacent imprints are partially overlapped.

In some embodiments, the path spacing B is one of the configuration parameters configured in the autonomous moving device or configured in an external device in communication with the autonomous moving device in advance, and the path spacing B is determined according to the outer span D between the imprint on one side of the body 101 and the imprint on the other side of the body 101 produced by the grass-pressing mechanism 102 of the autonomous moving device, and the width d of the imprint on a single side.

In some embodiments, in a case that the grass-pressing assembly of the grass-pressing mechanism 102 is the moving assembly 103 of the autonomous moving device, referring to FIG. 7, the outer span D is equal to the distance between the two farthest boundaries of two imprints produced by the moving assembly 103 in a certain traveling direction of the autonomous moving device when the autonomous moving device moves along the traveling direction. From another angle, in a case that all the wheel widths of the two outermost moving wheel of the moving assembly 103 on the body 101 can leave obvious imprints on the lawn, referring to FIG. 2, the outer span D refers to the distance between the outer sides of the two outermost moving wheel (e.g., moving wheel 1032 and moving wheel 1034) on the body 101 of the autonomous moving device, i.e., the distance from the outer side of the moving wheel 1032 to the outer side of the moving wheel 1034. Referring to FIG. 7, the width d of the imprint on a single side is equal to the width of a single imprint produced by the moving assembly 103 when the autonomous moving device moves in a certain traveling direction. From another angle, in a case that all the wheel widths of the moving wheel of the moving assembly 103 located on one side of the body 101 can leave obvious imprints on the lawn, referring to FIG. 2, the width d of the imprint on a single side refers to the distance between the inner side of one moving wheel and the outer side of the other moving wheel on the same side of the body 101 (e.g., moving wheel 1031 and moving wheel 1032, or moving wheel 1033 and moving wheel 1034), i.e., the distance between the inner side of the moving wheel 1031 and the outer side of the moving wheel 1032, or the distance between the inner side of the moving wheel 1033 and the outer side of the moving wheel 1034. Generally, the former is equal to the later. If some of the moving wheel of the autonomous moving device do not produce imprints when moving in the working area, or if some of the moving wheel only produce imprints through the parts of the wheel widths in contact with the ground, or if the imprints are not obvious and can be ignored visually, then the outer span D only is equal to the distance between the two farthest boundaries of two imprints produced by the moving assembly 103 in a certain traveling direction of the autonomous moving device when the autonomous moving device moves along the traveling direction, and the width d of the imprint on a single side is only equal to the width of a single imprint produced by the moving assembly 103 when the autonomous moving device moves in a certain traveling direction.

In some embodiments, the moving wheel 1031 and the moving wheel 1033 located at the front of the body 101 of the autonomous moving device are driven wheels, while the moving wheel 1032 and the moving wheel 1034 located at the rear of the body 101 are driving wheels. According to the prior art, it can be seen that when the weight of the driven wheels is light, the imprints produced by the movement of the driven wheels on the lawn is not obvious in terms of visual effect and can be ignored. That is to say, the visual effect of the stripes with the first color and the stripes with the second color in alternating and interval distribution presented in the working area mainly depends on the imprints produced by the two driving wheels at the rear of the autonomous moving device, i..e., the moving wheel 1032 and the moving wheel 1034. In this case, the outer span D is equal to the distance between the farthest boundaries of two imprints produced by the moving wheel 1032 and the moving wheel 1034 in a direction parallel to a certain traveling direction of the autonomous moving device when the autonomous moving device moves along the traveling direction. If all the wheel widths of the moving wheel 1032 and the moving wheel 1034 can leave obvious imprints on the lawn, the outer span D is also equal to the distance from the outer side of the moving wheel 1032 to the outer side of the moving wheel 1034. In this case, the width d of the imprint on a single side is equal to the width of a single imprint produced by the moving wheel 1032 and the moving wheel 1034 when the autonomous moving device moves in a certain traveling direction. If all the wheel widths of the moving wheel 1032 and the moving wheel 1034 can leave obvious imprints on the lawn, the wheel width on a single side is also equal to the wheel width of the moving wheel 1032 or the wheel width of the moving wheel 1034 (generally, the wheel widths of the two are equal).

In some embodiments, the provided autonomous moving device includes two driving wheels located at the rear of the body 101 and on two sides of the body 101, and a driven wheel located at the middle of the front of the body 101. When the weight of the driven wheel located at the middle of the front of the body 101 is light, the imprint produced by the movement of the driven wheel on the lawn is not obvious in terms of visual effect and can be ignored. That is to say, the visual effect of the stripes with the first color and the stripes with the second color in alternating and interval distribution presented in the working area mainly depends on the imprints produced by the two driving wheels at the rear of the autonomous moving device. In this case, the outer span D is equal to the distance between the farthest boundaries of two imprints produced by the driving wheels in a direction parallel to a certain traveling direction of the autonomous moving device when the autonomous moving device moves along the traveling direction. If all the wheel widths of the two driving wheels can leave obvious imprints on the lawn, the outer span D is also equal to the distance from the outer side of one driving wheel to the outer side of the other driving wheel. In this case, the wheel width on a single side is equal to the width of a single imprint produced by the driving wheels when the autonomous moving device moves in a certain traveling direction. If all the wheel widths of the driving wheels can leave obvious imprints on the lawn, the wheel width on a single side is also equal to the wheel width of any driving wheel (generally, the wheel widths of the two driving wheels are equal).

Generally, the wheel widths of the autonomous moving device and the relative position relationship between them are determined during the production and manufacturing stage, that is, the outer span D and the width d of the imprint on a single side may be determined during the production and manufacturing stage of the autonomous moving device. Therefore, before the autonomous moving device leaves the factory for sale, the path spacing B may be calculated according to the determined outer span D and the width d of the imprint on a single side, and stored as one of the configuration parameters of the autonomous moving device in advance in the autonomous moving device or in an external device in communication with the autonomous moving device. The stored path spacing B may be a fixed value or different values of different spacings between two adjacent imprints of multiple imprints produced by the corresponding moving assembly 103. The user may select from different stripe visual effects or stripe visual effects corresponding to different path spacings B according to the task requirement or user preference before the autonomous moving device performs a certain task.

In some embodiments, the autonomous moving device may acquire the outer span D and the width d of the imprint on a single side before leaving the factory for sale, and then calculate the value or range of the path spacing B according to the relational expressions among the path spacing B, the outer span D, and the width d of the imprint on a single side.

The autonomous moving device may acquire the outer span D and the width d of the imprint on a single side through manual input by relevant personnel, or the autonomous moving device may automatically acquire corresponding sensor data. In some other embodiments, the autonomous moving device may also acquire the outer span D and the width d of the imprint on a single side after leaving the factory for sale, and then calculate the value or range of the path spacing B according to the relational expressions among the path spacing B, the outer span D, and the width d of the imprint on a single side. The autonomous moving device may acquire the outer span D and the width d of the imprint on a single side through manual input by the user, or the autonomous moving device may automatically acquire corresponding sensor data. In some embodiments, the user inputs or selects a specific stripe visual effect, the autonomous moving device calculates the corresponding path spacing B according to the acquired outer span D, the width d of the imprint on a single side, and the stripe visual effect set by the user, and the autonomous moving device is controlled to move in the working area according to the path spacing B to achieve the stripe visual effect desired by the user.

In some embodiments, the path spacing B is controlled, so that the path spacing B, the outer span D, and the width d of the imprint on a single side satisfy: B=N(D-2d), D/4≤d<D/3, so that the spacing between two adjacent imprints of multiple imprints produced by the grass-pressing mechanism 102 is less than or equal to zero, including the following two situations: in situation 1, two adjacent imprints have no gap therebetween and are in close contact with each other, that is, the spacing is zero, as shown in FIG. 11; in situation 2, two adjacent imprints are partially overlapped, that is, the spacing is less than zero, as shown in FIG. 11.

Taking N=1 as an example, how the imprints are formed will be described below in detail. When N=1, the autonomous moving device only traverses the working area once, and B'=B/N=B, that is, B'=D-2d, and D/4≤d<D/3.

Referring to FIG. 11, step S100 is performed, the autonomous moving device moves along path 1 in a first traveling direction, and the moving assembly 103 produces two imprints in a first direction, i.e., imprint 1 and imprint 2; step S110 is performed, the autonomous moving device moves along path 2 in a second traveling direction, and the grass-pressing mechanism 102 produces two imprints in a second direction, i.e., imprint 3 and imprint 4, where the spacing between the adjacent imprint 2 and imprint 3 is zero; step S120 is performed, the grass-pressing mechanism 102 produces two imprints in the first direction, i.e., imprint 5 and imprint 6, where the spacing between the adjacent imprint 4 and imprint 5 is zero, and the spacing between the adjacent imprint 2 and imprint 5 is also zero; step S130 is performed, the grass-pressing mechanism 102 produces two imprints in the second direction, i.e., imprint 7 and imprint 8, where the spacing between the adjacent imprint 4 and imprint 7 is zero, and the spacing between the adjacent imprint 6 and imprint 7 is also zero. That is, in some embodiments, among the four imprints produced by the grass-pressing mechanism 102 on the two adjacent paths in the same traveling direction, the two imprints located at the middle are adjacent and have a spacing of zero, that is, the two imprints in the first direction produced by the grass-pressing mechanism 102 on the two adjacent paths in the first traveling direction are adjacent and have a spacing of zero, and the two imprints in the second direction produced by the grass-pressing mechanism 102 on the two adjacent paths in the second traveling direction are adjacent and have a spacing of zero; when the two adjacent paths in the first traveling direction and the two adjacent paths in the second traveling direction are alternately arranged, the two adjacent imprints in the first direction are adjacent to the two adjacent imprints in the second direction, and have a spacing of zero. When step S100 to step S130 are repeatedly performed, the visual effect of stripes with a first color and stripes with a second color that are in alternating gapless distribution and have a uniform width can be obtained, and the uniform stripe width W is equal to the path spacing B'.

Referring to FIG. 12, step S100 is performed, the autonomous moving device moves along path 1 in a first traveling direction, and the grass-pressing mechanism 102 produces two imprints in a first direction, i.e., imprint 1 and imprint 2; step S110 is performed, the autonomous moving device moves along path 2 in a second traveling direction, and the grass-pressing mechanism 102 produces two imprints in a second direction, i.e., imprint 3 and imprint 4, where the spacing between the adjacent imprint 2 and imprint 3 is zero; step S120 is performed, the grass-pressing mechanism 102 produces two imprints in the first direction, i.e., imprint 5 and imprint 6, where the spacing between the adjacent imprint 4 and imprint 5 is zero, and the spacing R2 between the adjacent imprint 2 and imprint 5 satisfies: R2<0 mm, that is, imprint 2 and imprint 5 are partially overlapped; step S130 is performed, the grass-pressing mechanism 102 produces two imprints in the second direction, i.e., imprint 7 and imprint 8, where the spacing R2 between the adjacent imprint 4 and imprint 7 satisfies: R2<0 mm, and the spacing between the adjacent imprint 6 and imprint 7 is also zero. That is, in some embodiments, among the four imprints produced by the grass-pressing mechanism 102 on the two adjacent paths in the same traveling direction, the two imprints located at the middle are adjacent and the spacing R2 satisfies: R2<0 mm, that is, the two imprints located at the middle are partially overlapped, that is, the two imprints in the first direction located at the middle and produced by the grass-pressing mechanism 102 on the two adjacent paths in the first traveling direction are adjacent and the spacing R2 satisfies: R2<0 mm, the two imprints in the second direction located at the middle and produced by the grass-pressing mechanism 102 on the two adjacent paths in the second traveling direction are adjacent and the spacing R2 satisfies: R2< 0 mm; when the two adjacent paths in the first traveling direction and the two adjacent paths in the second traveling direction are alternately arranged, the two adjacent imprints in the first direction are adjacent to the two adjacent imprints in the second direction, and have a spacing of zero. Although the two imprints located at the middle and produced on the two adjacent paths in the same traveling direction are partially overlapped, due to the same traveling direction, the lodging direction of the grass under the imprints is the same, so that the finally presented visual effect is a visual effect of stripes with one color, i.e., stripes with a first color or stripes with a second color. Therefore, when step S100 to step S130 are repeatedly performed, the visual effect of stripes with a first color and stripes with a second color that are in alternating gapless distribution and have a uniform width can be obtained, and the uniform stripe width W is equal to the path spacing B'. Referring to FIG. 11 and FIG. 12, in these embodiments, regardless of whether the spacing between the two adjacent imprints of the multiple imprints produced by the grass-pressing mechanism 102 is equal to zero or less than zero, when the path spacing B', outer span D, and width d of the imprint on a single side satisfy B'=D-2d, and the outer span D and the width d of the imprint on a single side satisfy D/4≤d<D/3, the autonomous moving device is controlled to repeatedly perform step S100 to step S130 according to the path spacing B' that satisfies the above relational expressions, so that the working area can present a visual effect of stripes with a first color and stripes with a second color that are in alternating gapless distribution and have a uniform width, and the uniform stripe width W is equal to the path spacing B'.

Refer to Table 1, which shows some values of the path spacing B', the outer span D, and the width d of the imprint on a single side that satisfy B'=D-2d and D/4≤d<D/3, and the stripe width W of the stripes presented in the working area. It is to be understood that the values in Table 1 are not intended to limit the values of the path spacing B', the outer span D, and the width d of the imprint on a single side, and are only intended to exemplarily describe that the path spacing B', the outer span D, and the width d of the imprint on a single side that satisfy B'=D-2d and D/4≤d<D/3 can achieve the above technical effect. All values in Table 1 are in mm.

**Table 1: B'=D-2d, D/4≤d<D/3**

| Outer span D | Width d of imprint on single side | Path spacing B' | Stripe width W |
|---|---|---|---|
| 400 | 100 | 200 | 200 |
| 500 | 150 | 200 | 200 |
| 600 | 180 | 240 | 240 |
| 700 | 200 | 300 | 300 |
| 800 | 240 | 320 | 320 |

When N is an odd number greater than 1, i.e., B=N(D-2d) and D/4≤d<D/3, since B'=B/N, the relational expressions B'=D-2d and D/4≤d<D/3 are still satisfied. Therefore, when the autonomous moving device performs traversal movement for N times in the working area according to the path spacing B, the working area can still present a visual effect of stripes with a first color and stripes with a second color that are in alternating gapless distribution and have a uniform width, and the uniform stripe width W is equal to the path spacing B'.

It can be seen that adopting the above solution make the working area present a visual effect of stripes with a first color and stripes with a second color that are in alternating gapless distribution and have a uniform width. Further, since the stripe width W is equal to the path spacing B', when the grass-pressing assembly of the grass-pressing mechanism 2 is the moving assembly 103, the designer may determine the value range of the path spacing B according to the user's requirement on the stripe width W when designing the wheel outer span and single-side wheel width of the autonomous moving device, thus reversing the value ranges of the wheel outer span and single-side wheel width. In addition, the user may also set and select the path spacing B according to the preferred stripe width W. Therefore, the above solution not only can make the lawn attractive, relieve the visual fatigue, and reduce the human resources and economic costs, but also can simplify the design work of the designer and facilitate the selection and setting by the user.

In some embodiments, the spacing B is controlled, so that the spacing B, the outer span D, and the width d of the imprint on a single side satisfy: B<N(D-2d), d≥D/4, and N(2d-40 mm)≤B≤N(2d+20 mm), so that among multiple imprints produced by the grass-pressing mechanism 102, the spacing R1 between two adjacent imprints under which the grass lodges along different traveling directions satisfies: 0≤R1≤40 mm, and the spacing R2 between two adjacent imprints under which the grass lodges along the same traveling direction satisfies: R2≤0 mm. Through experiments, it can be seen that since the spacing R1 between two adjacent imprints under which the grass lodges along different traveling directions is controlled within 0-40 mm and the spacing R1 is small, when the working area is large enough, for example, when it is a standard football field (with length of 90-120 m, and width of 45-90 m), the spacing is close to zero in terms of visual effect and can be ignored. When the path spacing B, the outer span D, and the width d of the imprint on a single side satisfy B<N(D-2d), d≥D/4, and N(2d-40 mm)≤B≤N(2d+20 mm), the working area can present stripes with a first color and stripes with a second color that are in alternating small-spacing distribution (R1=0-40 mm) and have a uniform width. In addition, since the spacing R2≤0 mm, the spacing R1 is controlled within 0-40 mm and the gap is small, the working area still presents stripes with a first color and stripes with a second color that are in alternating gapless distribution and have a uniform width.

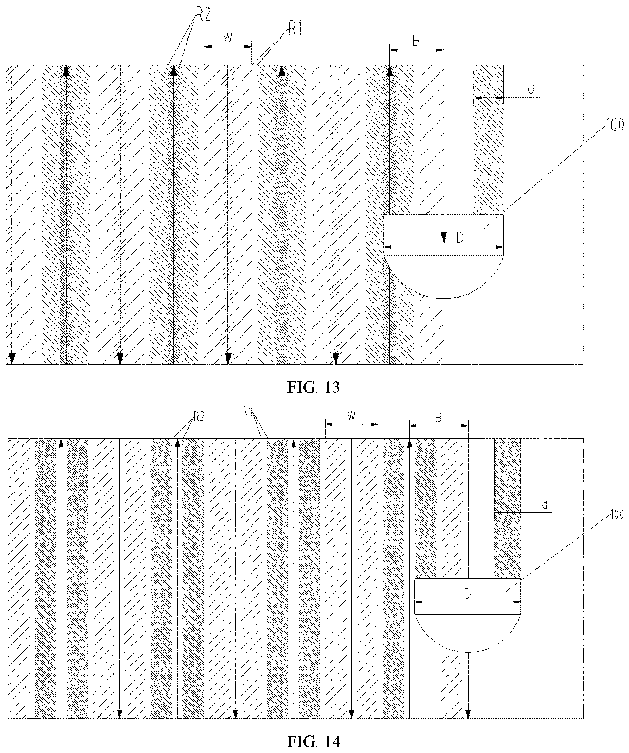

Taking N=1 as an example, how the imprints are formed will be described below in detail. When N=1, the autonomous moving device only traverses the working area once, and B'=B/N=B, that is, B'<D-2d, d≥D/4, and (2d-40 mm)≤B'≤(2d+20 mm). The above solution will be described below with reference to FIG. 13. In the embodiment shown in FIG. 13, the path spacing B' is 180 mm, the outer span D is 400 mm, and the width d of the imprint on a single side is 100 mm, thus satisfying B'<D-2d, d≥D/4, and 2d-40 mm≤B'≤2d+20 mm. During the movement of the autonomous moving device, step S100 to step S130 are repeatedly performed. Among the multiple imprints produced by the grass-pressing mechanism 102, the two adjacent imprints formed in different traveling directions have a small spacing (spacing R1=20 mm), which can be ignored in terms of visual effect. However, the two adjacent imprints formed in the same traveling direction are partially overlapped (R2=-40 mm). Since the lodging direction of the grass under the two imprints is the same, what are finally presented are still stripes with the same color. Therefore, in terms of visual effect, the working area still presents stripes with a first color and stripes with a second color that are in alternating gapless distribution and have a uniform width. In this embodiment, the stripe width W is 160 mm.

Refer to Table 2, which shows some values of the path spacing B', the outer span D, and the width d of the imprint on a single side that satisfy B'<D-2d, d≥D/4, and (2d-40 mm)≤B'≤(2d+20 mm), the stripe width W of the stripes presented in the working area, the spacing R1, and the spacing R2. It is to be understood that the values in Table 2 are not intended to limit the values of the path spacing B', the outer span D, and the width d of the imprint on a single side, and are only intended to exemplarily describe that the path spacing B', the outer span D, and the width d of the imprint on a single side that satisfy B'<D-2d, d≥D/4, and (2d-40 mm)≤B'≤(2d+20 mm) can achieve the above technical effect. All values in Table 2 are in mm.

**Table 2: B'<D-2d, d≥D/4, and (2d-40 mm)≤B'≤(2d+20 mm)**

| Outer span D | Width d of imprint on single side | Path spacing B' | Spacing R1 | Spacing R2 | Stripe width W |
|---|---|---|---|---|---|
| 400 | 100 | 180 | 20 | -40 | 160 |
| 500 | 130 | 220 | 20 | -60 | 200 |
| 600 | 150 | 280 | 20 | -40 | 260 |
| 700 | 180 | 330 | 10 | -40 | 320 |
| 800 | 200 | 380 | 20 | -40 | 360 |

From Table 2, it can be seen that the path spacing B', the spacing R1, and the stripe width W satisfy: W=B'-R1. Since R1=0-40 mm and it can be ignored in terms of visual effect, W≈B'. When the grass-pressing assembly of the grass-pressing mechanism 102 is composed of the moving assembly 103 of the autonomous moving device, the designer may still determine the value range of the path spacing B' according to the user's requirement on the stripe width W when designing the wheel outer span and single-side wheel width of the autonomous moving device, thus reversing the value ranges of the wheel outer span and single-side wheel width. In addition, the user may also set and select the path spacing B' according to the preferred stripe width W.

When N is an odd number greater than 1, that is, B<N(D-2d), d≥D/4, and N(2d-40 mm)≤B≤N(2d+20 mm), since B'=B/N, the relational expressions B'<D-2d, d≥D/4, and (2d-40 mm)≤B'≤(2d+20 mm) are still satisfied. Therefore, after the autonomous moving device performs traversal movement for N times in the working area according to the path spacing B, the working area can still achieve the above technical effect.

In some embodiments, the path spacing B is controlled, so that the path spacing B, the outer span D, and the width d of the imprint on a single side satisfy: B>N(D-2d), d≥D/4, and N(2d-40 mm)≤B≤N(2d+20)mm, so that among multiple imprints produced by the grass-pressing mechanism 102, the spacing R2 between two adjacent imprints under which the grass lodges along the same traveling direction satisfies: 0≤R2≤40 mm, and the spacing R1 between two adjacent imprints under which the grass lodges along different traveling directions satisfies: -40 mm≤R1≤40 mm. It is to be understood that when -40 mm≤R1≤0 mm, the two adjacent imprints formed by the grass-pressing mechanism 102 when moving along different traveling directions re partially overlapped, the overlapped part is pressed once by the grass-pressing mechanism 102 in the first traveling direction and once by the grass-pressing mechanism 102 in the second traveling direction, and the visual effect of the overlapped part is the same as the visual effect of the area not pressed by the grass-pressing mechanism 102 in terms of visual effect. That is, when the two adjacent imprints formed by the grass-pressing mechanism 102 when moving in different traveling directions are partially overlapped, the two adjacent imprints have a spacing therebetween in terms of visual effect. Through experiments, it can be seen that since the absolute values of the spacing R1 and spacing R2 are controlled within 0-40 mm and the spacing is small, when the working area is large enough, for example, when it is a standard football field (with length of 90-120 m, and width of 45-90 m), the spacing R1 and the spacing R2 are close to zero in terms of visual effect and can be ignored. When the path spacing B, the outer span D, and the width d of the imprint on a single side satisfy B>N(D-2d), d≥D/4, and N(2d-40 mm)≤B≤N(2d+20)mm, the working area can present stripes with a first color and stripes with a second color that are in alternating small-spacing distribution and have a uniform width. In addition, since the absolute values of the spacing R1 and the spacing R2 are controlled within 0-40 mm and the gap is small, the working area still presents stripes with a first color and stripes with a second color that are in alternating gapless distribution and have a uniform width.

Taking N=1 as an example, how the imprints are formed will be described below in detail. When N=1, the autonomous moving device only traverses the working area once, and B'=B/N=B, that is, B'>D-2d, d≥D/4, and (2d-40 mm)≤B'≤(2d+20 mm). The above solution will be described below with reference to FIG. 14. In the embodiment shown in FIG. 14, the path spacing B' is 220 mm, the outer span D is 400 mm, and the width d of the imprint on a single side is 100 mm, thus satisfying B'>D-2d, d≥D/4, and 2d-40 mm≤B'≤2d+20 mm. During the movement of the autonomous moving device, step S100 to step S130 are repeatedly performed. Among the multiple imprints produced by the grass-pressing mechanism 102, the two adjacent imprints formed in the same traveling directions have a spacing R2 (R2=40 mm), which can be ignored in terms of visual effect. However, between the two adjacent imprints formed in the same traveling direction, since the lodging direction of the grass under the two imprints is the same, what are finally presented are still stripes with the same color. During the movement of the autonomous moving device, among the multiple imprints produced by the grass-pressing mechanism 102, the two adjacent imprints formed in different traveling directions have a spacing R1 (R1=20 mm), which can be ignored in terms of visual effect. Therefore, in terms of visual effect, the working area still presents stripes with a first color and stripes with a second color that are in alternating gapless distribution and have a uniform width. In this embodiment, the stripe width W is 200 mm.

Refer to Table 3, which shows some values of the path spacing B', the outer span D, and the width d of the imprint on a single side that satisfy B'>D-2d, d≥D/4, and 2d-40 mm≤B'≤2d+20 mm, the stripe width W of the stripes presented in the working area, the spacing R1, and the spacing R2. It is to be understood that the values in Table 3 are not intended to limit the values of the path spacing B', the outer span D, and the width d of the imprint on a single side, and are only intended to exemplarily describe that the path spacing B', the outer span D, and the width d of the imprint on a single side that satisfy B'>D-2d, d≥D/4, and 2d-40 mm≤B'≤2d+20 mm can achieve the above technical effect. All values in Table 3 are in mm.

**Table 3: B'>D-2d, d≥D/4, and 2d-40 mm≤B'≤2d+20 mm**

| Outer span D | Width d of imprint on single side | Path spacing B' | Spacing R1 | Spacing R2 | Stripe width W |
|---|---|---|---|---|---|
| 400 | 100 | 220 | 20 | 40 | 200 |
| 500 | 130 | 250 | 10 | 0 | 240 |
| 600 | 150 | 310 | -10 | 20 | 300 |
| 700 | 180 | 350 | -10 | 0 | 340 |
| 800 | 200 | 410 | 10 | 20 | 400 |

From Table 3, it can be seen that the path spacing B', the spacing R1, and the stripe width W satisfy: W=B'-|R1|. Since |R1=0-40 mm and it can be ignored in terms of visual effect, W≈B'. When the grass-pressing assembly of the grass-pressing mechanism 102 is composed of the moving assembly 103, the designer may still determine the value range of the path spacing B' according to the user's requirement on the stripe width W when designing the wheel outer span and single-side wheel width of the autonomous moving device, thus reversing the value ranges of the wheel outer span and single-side wheel width. In addition, the user may also set and select the path spacing B' according to the preferred stripe width W.

When N is an odd number greater than 1, that is, B>N(D-2d), d≥D/4, and N(2d-40 mm)≤B≤N(2d+20 mm), since B'=B/N, the relational expressions B'>D-2d, d≥D/4, and (2d-40 mm)≤B'≤(2d+20 mm) are still satisfied. Therefore, after the autonomous moving device performs traversal movement for N times in the working area according to the path spacing B, the working area can still achieve the above technical effect.

In some embodiments, the spacing between two adjacent imprints is not limited, and the width of the stripes with different shades of color presented in the working area being uniform is not limited, either. In this case, the path spacing B, the outer span D, and the width d of the imprint on a single side may also not satisfy the relational expressions in Table 1, Table 2, and Table 3 above, and the working area can finally present a visual effect of stripes with a first color and stripes with a second color that are in alternating interval distribution. In some embodiments, the path spacing B is controlled to satisfy: 4/5*N(D-2d)≤B≤6/5*N(D-2d).

In some embodiments, when the grass-pressing assembly of the grass-pressing mechanism 102 is composed of the moving assembly 103, in order to make the stripes finally formed in the working area more attractive, referring to FIG. 2, it is also necessary to control the spacing X between the outer side of the moving wheel 1031 and the inner side of the moving wheel 1032 (or between the outer side of the moving wheel 1033 and the inner side of the moving wheel 1034) on the same side of the body 101 along a direction perpendicular to the traveling direction of the moving assembly 103. If the spacing between the two is too large, there will be a large gap in the middle of each imprint produced by the movement of the moving assembly 103 in terms of visual effect. If the gap is too large, it will affect the attractiveness of the finally formed stripes. In some embodiments, the above spacing X is controlled to be less than or equal to 40 mm, so that the gap in the middle of the imprint can be ignored in terms of visual effect.

This application further provides a control method for an autonomous moving device. The control method includes the following steps: the autonomous moving device is controlled to perform traversal movement for N times in a working area on a lawn. N is an odd number greater than or equal to 1. Referring to FIG. 3, the autonomous moving device is controlled to move along multiple parallel and equally-spaced paths in a single traversal movement, the path spacing between adjacent paths in the single traversal movement is B, and the directions of adjacent paths in the single traversal movement are opposite, so that the grass-pressing mechanism 102 produces an imprint in a first direction and an imprint in a second direction on the lawn. Referring to FIG. 4, paths of different single traversal movements of N traversal movements of the autonomous moving device are non-coincident and parallel to each other. After the N traversal movements, the directions of adjacent paths formed by the N traversal movements are opposite, the path spacing between adjacent paths formed by the N traversal movements is B', and B'=B/N. The path spacing B is determined, so that the grass-pressing mechanism 102 produces multiple imprints in the first direction and multiple imprints in the second direction on the lawn. The imprints in the first direction and the imprints in the second direction are adjacently arranged at intervals.

FIG. 16 is a schematic structural view of an automatic lawn mower 100 in some embodiments. The automatic lawn mower 100 includes: a body 101; and a mowing assembly 105 mounted to the body 101 and configured to perform a mowing task. Referring to FIG. 16, the automatic lawn mower 100 further includes: a moving assembly 103 mounted to the body 101 and configured to drive the body 101 to move, where in combination with FIG. 2, it can be seen that the moving assembly 103 includes a moving wheel 1031 and a moving wheel 1032 located on one side of the body 101, and further includes a moving wheel 1033 and a moving wheel 1034 located on the other side of the body 101; and a controller 104 configured to control the moving assembly 103 to alternately move along a path in a first traveling direction and a path in a second traveling direction in the working area. Referring to FIG. 11, the path in the first traveling direction and the path in the second traveling direction are substantially parallel and opposite in directions. The path spacing B between the adjacent path in the first traveling direction and path in the second traveling direction is determined according to the outer span D of the automatic lawn mower 100 and the width d of the imprint on a single side.

In some embodiments, the controller 104 controls the mowing assembly 105 to perform a mowing task while the moving assembly 103 moves along the path in the first traveling direction or the path in the second traveling direction. In this way, the automatic lawn mower 100 can traverse the working area, not only forming interval stripes with darker and lighter colors, but also performing a mowing task, thus reducing the human resources and economic costs.

In some embodiments, the path spacing B, the outer span D, and the width d of the imprint on a single side satisfy: 4/5*N(D-2d)≤B≤6/5*N(D-2d).The controller 104 controls the moving assembly 103 to move according to a certain path spacing B within the above range, so that the working area presents an attractive visual effect of stripes with a first color and stripes with a second color that are in alternating interval distribution.

In some embodiments, the path spacing B, the outer span D, and the width d of the imprint on a single side satisfy: B=N(D-2d), and D/4≤d<D/3.The controller 104 controls the moving assembly 103 to move according to a certain path spacing B within the above range, so that the spacing R between two adjacent imprints among multiple imprints produced by the moving assembly 103 is less than or equal to zero, that is, the working area presents a visual effect of stripes with a first color and stripes with a second color that are in alternating gapless distribution and have a uniform width, and the uniform stripe width W is equal to the path spacing B'.

In some embodiments, the path spacing B, the outer span D, and the width d of the imprint on a single side satisfy: B<N(D-2d), d≥D/4, and N(2d-40 mm)≤B≤N(2d+20 mm). The controller 104 controls the moving assembly 103 to move according to a certain path spacing B within the above range, so that among multiple imprints produced by the moving assembly 103, the spacing R1 between two adjacent imprints under which the grass lodges along different traveling directions satisfies: 0 mm≤R1≤40 mm, and the spacing R2 between two adjacent imprints under which the grass lodges along the same traveling direction satisfies: R2≤0 mm, so that the working area can present stripes with a first color and stripes with a second color that are in alternating small-spacing distribution and have a uniform width. In addition, since the spacing R2≤0 mm, the spacing R1 is controlled within 0-40 mm and the gap is small, the working area still presents stripes with a first color and stripes with a second color that are in alternating gapless distribution and have a uniform width, and the path spacing B, the spacing R1 and the stripe width W satisfy: W=B'-R1.

In some embodiments, the path spacing B, the outer span D, and the width d of the imprint on a single side satisfy: B>N(D-2d), d≥D/4, and N(2d-40 mm)≤B≤N(2d+20)mm. The controller 104 controls the moving assembly 103 to move according to a certain path spacing B within the above range, so that among multiple imprints produced by the moving assembly 103, the spacing R2 between two adjacent imprints under which the grass lodges along the same traveling direction satisfies: 0 mm≤R2≤40 mm, and the spacing R1 between two adjacent imprints under which the grass lodges along different traveling directions satisfies: -40 mm≤R1≤40mm, so that the working area can present stripes with a first color and stripes with a second color that are in alternating small-spacing distribution and have a uniform width. In addition, since the absolute values of the spacing R1 and the spacing R2 are less than or equal to 40 mm and the gap is small, the working area still presents stripes with a first color and stripes with a second color that are in alternating gapless distribution and have a uniform width, and the path spacing B, the spacing R1 and the stripe width W satisfy: W=B'-|R1|.

In some embodiments, in order to make the stripes finally formed in the working area more attractive, referring to FIG. 2, it is also necessary to control the spacing X between the outer side of the moving wheel 1031 and the inner side of the moving wheel 1032 (or between the outer side of the moving wheel 1033 and the inner side of the moving wheel 1034) on the same side of the body 101 of the automatic lawn mower 100 along a direction perpendicular to the traveling direction of the moving assembly 103. If the spacing between the two is too large, there will be a large gap in the middle of each imprint produced by the movement of the moving assembly 103 in terms of visual effect. If the gap is too large, it will affect the attractiveness of the finally formed stripes. In some embodiments, the above spacing X is controlled to be less than or equal to 40 mm, so that the gap in the middle of the imprint can be ignored in terms of visual effect.

In some embodiments, when N=1, the controller 104 of the automatic lawn mower 100 performs step S100 to step S130 as shown in FIG. 6. In the above control method, the controller 104 needs to control the path spacing B (B=B'), so that among the four imprints produced by the moving assembly 103 on the two adjacent paths in the same traveling direction, the two imprints located at the middle are adjacent. Referring to FIG. 10, among the four imprints, i.e., imprint 1, imprint 2, imprint 5, and imprint 6, produced by the automatic lawn mower 100 on the adjacent path 1 and path 3 in the first traveling direction, the two imprints located at the middle, i.e., imprint 2 and imprint 5, are adjacent. Referring to FIG. 10, among the four imprints, i.e., imprint 3, imprint 4, imprint 7, and imprint 8, produced by the automatic lawn mower 100 on the adjacent path 2 and path 5 in the second traveling direction, the two imprints located at the middle, i.e., imprint 4 and imprint 7, are adjacent.

In the above control method, the controller 104 also needs to control the path spacing B, so that when the two adjacent paths in the first traveling direction (e.g., path 1 and path 3 shown in FIG. 10) and the two adjacent paths in the second traveling direction (e.g., path 2 and path 4 shown in FIG. 10) are alternately arranged (that is, path 1 to path 4 are alternately arranged in the first traveling direction and the second traveling direction), the two adjacent first imprints (e.g., imprint 2 and imprint 5) are adjacent to the two adjacent second imprints (e.g., imprint 4 and imprint 7). That is to say, referring to FIG. 10, the stripes with the first color formed by the two adjacent first imprints, i.e., imprint 2 and imprint 5, are adjacent to the stripes with the second color formed by the two adjacent second imprints, i.e., imprint 4 and imprint 7.

When the controller 104 controls the automatic lawn mower 100 to repeatedly perform step S100 to step S130 in the working area, multiple adjacent stripes with the first color and multiple stripes with the second color, i.e., the stripes with the first color and the stripes with the second color that are in alternating shades of color shown in FIG. 11, can be produced, so as to achieve the effects of increasing the attractiveness and relieving the visual fatigue. The alternating and interval distribution of the stripes with the first color and the stripes with the second color not only looks attractive, but also can relieve the visual fatigue for people who need to stare at the lawn for a long time, such as players, referees and audience on the football field.

The path spacing B is calculated and determined according to the outer span D of the automatic lawn mower 100 and the width d of the imprint on a single side.

Generally, the wheel widths of the automatic lawn mower 100 and the relative position relationship between them are determined during the production and manufacturing stage, that is, the outer span D and the width d of the imprint on a single side may be determined during the production and manufacturing stage of the automatic lawn mower 100. Therefore, before the automatic lawn mower 100 leaves the factory for sale, the path spacing B may be calculated according to the determined outer span D and the width d of the imprint on a single side, and stored as one of the configuration parameters of the automatic lawn mower 100 in advance in the automatic lawn mower 100 or in an external device. The stored path spacing B may be a fixed value or different values of different spacings between two adjacent imprints of multiple imprints produced by the corresponding moving assembly 103. The user may select to set corresponding parameters according to task needs or the preferences of the user before the automatic lawn mower 100 performs a specific task, so that the controller 104 can acquire different path spacings B to control the movement of the moving assembly 103 and achieve corresponding stripe visual effects.

In some embodiments, the automatic lawn mower 100 may acquire the outer span D and the width d of the imprint on a single side before leaving the factory for sale, and then calculate the value or range of the path spacing B according to the relational expressions among the path spacing B, the outer span D, and the width d of the imprint on a single side. The automatic lawn mower 100 may acquire the outer span D and the width d of the imprint on a single side through manual input by relevant personnel, or the automatic lawn mower 100 may automatically acquire corresponding sensor data. In some other embodiments, the automatic lawn mower 100 may also acquire the outer span D and the width d of the imprint on a single side after leaving the factory for sale, and then calculate the value or range of the path spacing B according to the relational expressions among the path spacing B, the outer span D, and the width d of the imprint on a single side. The automatic lawn mower 100 may acquire the outer span D and the width d of the imprint on a single side through manual input by the user, or the automatic lawn mower 100 may automatically acquire corresponding sensor data. In some embodiments, the user may input or select a specific stripe visual effect, the automatic lawn mower 100 calculates the corresponding path spacing B according to the acquired outer span D, the width d of the imprint on a single side, and the stripe visual effect set by the user, and then the controller 104 acquires the path spacing B and controls the moving assembly 103 to move in the working area according to the path spacing B to achieve the stripe visual effect desired by the user.

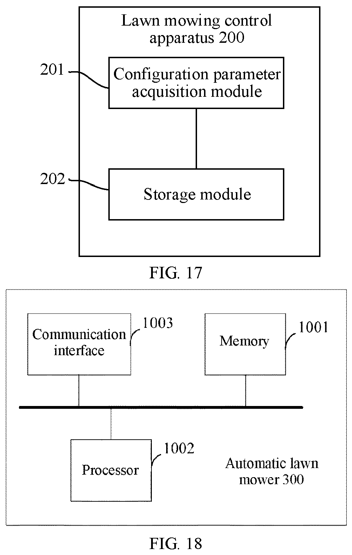

FIG. 17 is a schematic structural view of a lawn mowing control apparatus 200 in some embodiments. The lawn mowing control apparatus 200 includes: a configuration parameter acquisition module 201 configured to acquire configuration parameters of the automatic lawn mower 100 when the automatic lawn mower 100 is located in a working area; and a storage module 202 configured to store the configuration parameters of the automatic lawn mower 100, including the path spacing B. The lawn mowing control apparatus 200 is configured to, when the automatic lawn mower 100 is located in the working area and N=1, acquire the path spacing B from the storage module 202 through the configuration parameter acquisition module 201, and then perform step S100 to step S130.

When the lawn mowing control apparatus 200 controls the automatic lawn mower 100 to repeatedly perform step S100 to step S130 in the working area, multiple adjacent stripes with a first color and multiple stripes with the second color, i.e., the stripes with the first color and the stripes with the second color that are in alternating shades of color shown in FIG. 11, can be produced, so as to achieve the effects of increasing the attractiveness and relieving the visual fatigue. The alternating and interval distribution of the stripes with the first color and the stripes with the second color not only looks attractive, but also can relieve the visual fatigue for people who need to stare at the lawn for a long time, such as players, referees and audience on the football field.

FIG. 18 is a schematic structural view of an automatic lawn mower in some embodiments. The automatic lawn mower 300 includes: a memory 1001, a processor 1002, and a computer program stored on the memory 1001 and executable on the processor 1002. The processor 1002, when executing the program, implements the work plan scheduling method for the autonomous moving device provided in the above embodiment.

Further, the automatic lawn mower 300 further includes: a communication interface 1003 configured to achieve communication between the memory 1001 and the processor 1002. The memory 1001 is configured to storage the computer program executable on the processor 1002. The memory 1001 may include a high-speed RAM memory, or may further include a non-volatile memory, such as at least one magnetic disk memory. The processor 1002 is configured to, when executing the program, implement the work plan scheduling method for the autonomous moving device in the above embodiment. If the memory 1001, the processor 1002, and the communication interface 1003 are implemented independently, the communication interface 1003, the memory 1001, and the processor 1002 may be interconnected through a bus and communicate with each other. The bus may be an Industry Standard Architecture (ISA) bus, a Peripheral Component Interconnect (PCI) bus, or an Extended Industry Standard Architecture (EISA) bus. The bus may be divided into an address bus, a data bus, a control bus, etc. For ease of representation, only one thick line is used in FIG. 15, but it does not indicate that there is only one bus or one type of bus.

Alternatively, during practical implementation, if the memory 1001, the processor 1002, and the communication interface 1003 are integrated on a single chip, the memory 1001, the processor 1002, and the communication interface 1003 may communicate with each other through internal interfaces. The processor 1002 may be a Central Processing Unit (CPU), an Application Specific Integrated Circuit (ASIC), or one or more integrated circuits configured to implement the embodiments of the present invention.

The present invention further provides a computer device, which includes a memory and a processor. The memory has a computer program stored thereon. The processor executes the computer program stored on the memory to implement the method steps of the automatic lawn mower 100 and the lawn mowing control apparatus 200 described above.

The present invention further provides a computer-readable storage medium having a computer program stored thereon. The computer program, when executed by a processor, implements the method steps of the automatic lawn mower 100 and the lawn mowing control apparatus 200 described above.

The present invention further provides a computer program product, which includes a computer program. The computer program, when executed by a processor, implements the method steps of the automatic lawn mower 100 and the lawn mowing control apparatus 200 described above.

**In** this description, the description of the reference terms "an embodiment", "some embodiments", "an example", "a specific example", "some examples" and the like means that specific features, structures, materials or characteristics described in combination with the embodiment(s) or example(s) are included in at least one embodiment or example of the present invention. **In** this specification, schematic descriptions of the foregoing terms are not necessarily directed at the same embodiment or example. Besides, the specific features, the structures, the materials or the characteristics that are described may be combined in proper manners in any one or more embodiments or examples. **In** addition, a person skilled in the art may integrate or combine different embodiments or examples described in the specification and features of the different embodiments or examples as long as they are not contradictory to each other.

Any process or method description in a flowchart or otherwise described herein may be understood as representing a module, fragment, or portion of a code including executable instructions for implementing one or more steps of a customized logic function or process, and the scope of the exemplary embodiments of the present invention includes additional implementations, where the functions may be executed in a substantially simultaneous manner or in reverse order based on the functions involved, which may be understood by those skilled in the art to which the embodiments of the present invention belong.

The logic and/or steps shown in the flowcharts or described in any other manner herein, for example, a sequenced list that may be considered as executable instructions used for implementing logical functions, may be specifically implemented in any computer-readable medium to be used by an instruction execution system, apparatus, or device (for example, a computer-based system, a system including a processor, or another system that may obtain an instruction from the instruction execution system, apparatus, or device and execute the instruction) or to be used by combining such instruction execution systems, apparatuses, or devices. In the context of this specification, a "computer-readable medium" may be any apparatus that can include, store, communicate, propagate, or transmit the program for use by the instruction execution system, apparatus, or device or in combination with the instruction execution system, apparatus, or device. More specific examples (a non-exhaustive list) of the computer-readable medium may include the following: an electrical connection (electronic device) having one or more wires, a portable computer diskette (magnetic apparatus), a Random Access Memory (RAM), a Read-Only Memory (ROM), an Erasable Programmable Read-Only Memory (EPROM or flash memory), an optical fiber apparatus, and a portable Compact Disk Read-Only Memory (CDROM). In addition, the computer-readable medium may even be paper or other suitable media on which the program may be printed, because the program may be obtained electronically by, for example, optically scanning paper or other media, then editing, interpreting, or processing in other suitable ways if necessary, and then storing it in a computer memory.

It is to be understood that parts of the present invention may be implemented by using hardware, software, firmware, or a combination thereof. In the foregoing implementations, multiple steps or methods may be implemented by using software or firmware that are stored in a memory and are executed by a proper instruction execution system. For example, if hardware is used for implementation, same as in another implementation, implementation may be performed by any one of the following technologies well known in the art or a combination thereof: discrete logic circuits with logic gate circuits for implementing logical functions on data signals, application specific integrated circuits with suitable combinational logic gate circuits, programmable gate arrays (PGA), field programmable gate arrays (FPGA), etc.

A person of ordinary skill in the art may understand that all or some of the steps of the methods in the foregoing embodiments may be implemented by a program instructing relevant hardware. The program may be stored in a computer-readable storage medium. When the program is executed, one or a combination of the steps of the method embodiments are performed.

In addition, the functional units in various embodiments of the present invention may be integrated into one processing module or may exist separately and physically, or two or more units may be integrated into one module. The integrated module may be implemented in the form of hardware, or may be implemented in a form of a software functional module. If implemented in the form of software functional modules and sold or used as an independent product, the integrated module may also be stored in a computer-readable storage medium.

The storage medium mentioned above may be a read-only memory, a magnetic disk, an optical disc, or the like. Although the embodiments of the present invention have been shown and described above, it may be understood that the above embodiments are exemplary and cannot be understood as limitations to the present invention. Those skilled in the art may make changes, modifications, replacements, or variations to the above embodiments within the scope of the present invention.

## Claims

1. An autonomous moving device, which is movable on a lawn, the autonomous moving device comprising:
a body;
a grass-pressing mechanism mounted to the body, the grass-pressing mechanism comprising a grass-pressing assembly located on one side of the body and a grass-pressing assembly located on the other side of the body and being configured to produce an imprint on one side of the body and an imprint on the other side of the body on the lawn when the autonomous moving device moves on the lawn, and a width of the imprint on one side of the body being equal to a width of the imprint on the other side of the body; and
a controller mounted to the body and configured to control the autonomous moving device to move in a working area on the lawn,
wherein the controller is configured to:
control the autonomous moving device to perform traversal movement for N times in the working area on the lawn, N being an odd number greater than or equal to 1;
control the autonomous moving device to move along a plurality of parallel and equally-spaced paths in a single traversal movement, a path spacing between adjacent paths in the single traversal movement being B, and directions of adjacent paths in the single traversal movement being opposite, so that the grass-pressing mechanism produces an imprint in a first direction and an imprint in a second direction on the lawn;
paths of different single traversal movements of N traversal movements being non-coincident and parallel to each other; after the N traversal movements, directions of adjacent paths formed by the N traversal movements being opposite, a path spacing between adjacent paths formed by the N traversal movements being B', B'=B/N; and
determine the path spacing B, so that the grass-pressing mechanism produces a plurality of imprints in the first direction and a plurality of imprints in the second direction on the lawn, the imprints in the first direction and the imprints in the second direction being adjacently arranged at intervals.

2. The autonomous moving device according to claim 1, wherein the autonomous moving device comprises a moving assembly mounted to the body and configured to drive the body to move, and the moving assembly comprises moving wheel located on one side of the body and moving wheel located on the other side of the body; and the grass-pressing assemblies comprise the moving wheel.

3. The autonomous moving device according to claim 1 or 2, wherein the path spacing B is determined according to an outer span D of the imprint located on one side of the body and the imprint located on the other side of the body, and the width d of the imprint on a single side; the path spacing B, the outer span D, and the width d of the imprint on a single side satisfy: 4/5*N(D-2d)≤B≤6/5*N(D-2d).

4. The autonomous moving device according to claim 3, wherein the path spacing B, the outer span D, and the width d of the imprint on a single side satisfy: B=N(D-2d), and D/4≤d<D/3, so that the spacing between two adjacent imprints of the plurality of imprints produced by the grass-pressing mechanism is less than or equal to zero.

5. The autonomous moving device according to claim 3, wherein the path spacing B, the outer span D, and the width d of the imprint on a single side satisfy: B<N(D-2d), d≥D/4, and N(2d-40 mm)≤B≤N(2d+20 mm), so that among the plurality of imprints produced by the grass-pressing mechanism, the spacing R1 between two adjacent imprints in different directions satisfies: 0 mm≤R1≤40 mm, and the spacing R2 between two adjacent imprints in the same direction satisfies: R2≤0 mm.

6. The autonomous moving device according to claim 3, wherein the path spacing B, the outer span D, and the width d of the imprint on a single side satisfy: B>N(D-2d), d≥D/4, and N(2d-40 mm)≤B≤N(2d+20) mm, so that among the plurality of imprints produced by the grass-pressing mechanism, the spacing R2 between two adjacent imprints in the same direction satisfies: 0 mm≤R2≤40 mm, and the spacing R1 between two adjacent imprints in different directions satisfies: -40 mm≤R1≤40mm.

7. The autonomous moving device according to any one of claims 3 to 6, wherein the autonomous moving device is an automatic lawn mower, the automatic lawn mower further comprises a mowing assembly mounted to the body and configured to mow grass on the lawn, and a center of the mowing assembly is located on a longitudinal axis of the body; a mowing width M of the mowing assembly perpendicular to the longitudinal axis and the path spacing B satisfy: NM≥B.

8. The autonomous moving device according to claim 2, wherein the moving wheel located on one side of the body and the moving wheel located on the other side of the body each comprise a moving wheel located at the front of the body and a moving wheel located at the rear of the body; a spacing X between the moving wheel located at the front of the body and the moving wheel located at the rear of the body on the same side of the body along a direction perpendicular to a traveling direction of the moving assembly satisfies: X≤40 mm.

9. The autonomous moving device according to claim **1,** wherein the autonomous moving device performs traversal movement in the working area on the lawn according to an S-shaped path or a rectangular spiral path.

10. A method for controlling an autonomous moving device, the autonomous moving device being movable on a lawn, the autonomous moving device comprising:
a body;
a grass-pressing mechanism mounted to the body, the grass-pressing mechanism comprising a grass-pressing assembly located on one side of the body and a grass-pressing assembly located on the other side of the body and being configured to produce an imprint on one side of the body and an imprint on the other side of the body on the lawn when the autonomous moving device moves on the lawn, and a width of the imprint on one side of the body being equal to a width of the imprint on the other side of the body; and
a controller mounted to the body and configured to control the autonomous moving device to move in a working area on the lawn,
wherein the method comprises:
controlling the autonomous moving device to perform traversal movement for N times in the working area on the lawn, N being an odd number greater than or equal to 1;
controlling the autonomous moving device to move along a plurality of parallel and equally-spaced paths in a single traversal movement, a path spacing between adjacent paths in the single traversal movement being **B,** and directions of adjacent paths in the single traversal movement being opposite, so that the grass-pressing mechanism produces an imprint in a first direction and an imprint in a second direction on the lawn;
paths of different single traversal movements of N traversal movements being non-coincident and parallel to each other; after the N traversal movements, directions of adjacent paths formed by the N traversal movements being opposite, a path spacing between adjacent paths formed by the N traversal movements being B', B'=B/N; and
determining the path spacing **B,** so that the grass-pressing mechanism produces a plurality of imprints in the first direction and a plurality of imprints in the second direction on the lawn, the imprints in the first direction and the imprints in the second direction being adjacently arranged at intervals.

11. The method according to claim 10, wherein the grass-pressing mechanism comprises a grass-pressing assembly located on one side of the body and a grass-pressing assembly located on the other side of the body; the autonomous moving device comprises a moving assembly mounted to the body and configured to drive the body to move, and the moving assembly comprises moving wheel located on one side of the body and moving wheel located on the other side of the body; and the grass-pressing assemblies comprise the moving wheel.

12. The method according to claim 11, wherein the path spacing B is determined according to an outer span D of the imprint located on one side of the body and the imprint located on the other side of the body, and the width d of the imprint on a single side; the path spacing B, the outer span D, and the width d of the imprint on a single side satisfy: 4/5*N(D-2d)≤B≤6/5*N(D-2d).

13. The method according to claim 12, wherein the autonomous moving device is an automatic lawn mower, the automatic lawn mower further comprises a mowing assembly mounted to the body and configured to mow grass on the lawn, and a center of the mowing assembly is located on a longitudinal axis of the body; a mowing width M of the mowing assembly perpendicular to the longitudinal axis and the path spacing B satisfy: NM≥B.
